# EUROPEAN PATENT APPLICATION

(11) **EP 1 674 502 A1**
(43) Date of publication of application: **28.06.2006**
(21) Application number: 04788314.5
(22) Date of filing: 29.09.2004
(51) Int. Cl.: C08J 3/20, C08J 9/06, C08L 1/00, C08L 3/00, C08L 67/00, C08L 99/00

(54) **SCREW TYPE PROCESSING DEVICE AND PRODUCT USING THE DEVICE**

(30) Priority: 30.09.2003 JP 2003340611; 30.09.2003 JP 2003340612; 01.10.2003 JP 2003342812; 04.11.2003 JP 2003374239; 09.04.2004 JP 2004114873; 04.06.2004 JP 2004166551
(71) Applicant: Uchiyama, Kosuke, Nagaokakyo-shi, Kyoto 617-0833 (JP)
(72) Inventor: Uchiyama, Kosuke, Nagaokakyo-shi, Kyoto 617-0833 (JP)
(74) Representative: Morf, Jan Stefan
(86) International application number: PCT/JP2004/014248
(87) International publication number: WO 2005/030845

(57) **Abstract**

The present invention can execute efficiently the provision of a film-formable thermoplastic composition containing polysaccharides and proteins as the main ingredients or the preparation of polyester foamed products of practical utility by compressing a substance together with carbon dioxide and processing it as a fluid of critical state. An equipment useful for it is a screw type processing equipment for compressing a substance together with carbon dioxide continuously to give a fluid of critical state and the equipment is one in which the extruding screw having next to the raw material supplying part X, a vacuum part E in which the shaft of said screw is made thin and the gap volume between the screw blades is increased is provided and carbon dioxide is introduced to the vacuum part E and furthermore after the vacuum part E a compressing part F in which the shaft is again thickened and consisted of a screw having narrowed blade intervals is placed and then the thickness of the shaft is made to be substantially same as the periphery of the barrel and an orifice part L is provided in which an orifice 17 is provided on the surface or on the surroundings of said shaft. The maximum flow rate of the substance passing through the orifice is preferably designed to be 10 to 1500 cm/second.

## Description

### TECHNICAL FIELD

The present invention relates to a method, an equipment for processing, for example decomposing, extracting or subjecting to chemical synthesis, in which a substance is compressed together with carbon dioxide to give a fluid of critical state, under carbon dioxide supercritical or subcritical state, and a product prepared by using it, for example a composition by using starch, cellulose or polyester as the raw material, and a molding such as a foamed product and a film of said composition.

### BACKGROUND TECHNOLOGY

Extraction or decomposition of substances or chemical synthesis using supercritical carbon dioxide has been proposed in considerable numbers. Particularly, extraction of various components from natural substances under low temperature has been already put in practice.

For example Patent Document 1 proposes a continuous processing method, wherein an inactivation of enzyme, sterilization, deodorization or extraction of a liquid food or a liquid drug is processed by using a supercritical fluid or a subcritical fluid, and wherein a liquid raw material is injected to the sucking step or the compression step of a compressor using carbon dioxide as the active vehicle and is compressed together with carbon dioxide, and wherein carbon dioxide directly contacts the liquid raw material to form a high pressure gas-liquid fluidal mixture of critical state, and wherein the high pressure gas-liquid fluidal mixture of critical state is separated into high pressure carbon dioxide and high pressure carbon dioxide containing the liquid substance, and wherein the high pressure carbon dioxide containing the separated liquid substance is rapidly evacuated to exhaust low temperature carbon dioxide by release from critical state to inactivate the enzyme and to effect flavor extraction .

In this proposal, many number of equipment is required for supplying the raw material liquid to the compressor by a pump and further accomplishing supercritical state by a separator and thus equipment investment comes excessive to give undesirable poor economy. Also, the working condition is limited to low temperature and the range of application comes narrow disadvantageously.

Further, in Patent Document 2, a method and an equipment for processing recycled polyester products as useful resource are proposed. The recollected polyester product is crushed to a flake and washed, and moisture is evaporated in a screw milling extruder for the preceding step and a modifier and a catalyst are added to be subjected to a modifying reaction. Further a supercritical fluid is added into a extruder and extruded as a foamed product.

Although a screw extruder is used in this proposal, the modifying reaction is carried out in the proceeding step and the foamed product is prepared by pouring supercritical carbon dioxide in the succeeding step. Thus, no reaction in supercritical carbon dioxide is described in it.

Patent Document 3 proposes a method for the preparation of an aromatic polyol carbonate, in which organs, cells of living things or microbes, which can generate selectively aromatic polyol from aromatic polyol carbonate, or their treated products is contacted with carbonate ion and/or carbon dioxide.

Although above proposal describes that the reaction condition also includes the region of supercritical carbon dioxide, but no description of concrete method for the preparation under supercritical carbon dioxide is shown, and only a reaction under normal pressure is described as an Example.
Thermoplasticity can be given to starch by modifying starch and various proposals have been made. Also, compositions in which thermoplastic starch is blended with a thermoplastic resin or its moldings are proposed.

Further, Patent Document 4 makes a proposal in which softness is given to the main chain of starch and thermoplasticity is given to starch by introducing ester groups and so in the main glucose chain of starch. However, no description of a special part for supplying raw materials nor orifice part are made in the reaction equipment of the Document.

Patent Document 5 describes a composition prepared by blending a starch derivative which is prepared by introducing ester groups and the like to the main glucose chain to have softness in the main chain and thermoplasticity, with a thermoplastic resin, particularly a biodegradable resin. However, no description of a special part for supplying raw materials nor orifice part are made in the reaction equipment of the Document.

Generally, a thermoplastic composition is molded at high temperature in many cases. However, starch smells burnt when heated. Particularly, cheap corn starch has strong nice smell. Though this smell is good for corn foods, it is inappropriate for general moldings in many cases. No method for removing the burning smell of starch has been proposed.

Konjak blown powder means a powder sorted and removed as impurity in the preparation of pure powder of glucomannan from konjak. It is called blown powder ("Tobiko" in Japanese) as it is sorted by being blown with wind force utilizing specific gravity difference for sorting.

Nonpatent Document 1 describes an analytical result for the component of blown powder. Blown powder contains 4.0 % moisture, 17.0 % protein, 5.5 % lipid, 8.5 % ash and 60 to 65 % succharides. Succharides contain 20 to 23 % water-soluble components and 40 to 42 % water-insoluble components. The most of the water-soluble components is water-soluble glucomannan and the most of the water-insoluble components is starch.

Blown powder contains starch in large quantities in such a manner and moreover mannose contained in glucomannan has a specific structure not found as a free form in nature in which hydroxyl groups are arranged in three dimensions at the same side as methylol groups in a manner different from glucose. However, blown powder has been only considered as an industrial waste and no concrete attempt has been made for utilizing it.

Patent Document 5 describes a film comprising a biodegradable blend polymer in which a hydrolyzed and polycondensed starch and a biodegradable resin are blended. The resultant film has a proper tensile strength but has a low tear strength and thus it is easily broken when used as a garbage bag and is at issue in practical use. Further, Patent Document 5 contains no description on the means for enhancing tear strength practically although it contains a description on crosslinking reaction thought to contribute to tear strength.

Bean curd lees are produced in an amount of 744, 600 tons per year as a by-product of bean curd and its very small portion is used as foods and feeds.
However, the amount of consumption is very small compared to the amount of production and the most of it has been incinerated as a waste as it is difficult to be stored also because of high nutritive value and high perishability. Mean moisture in bean curd lees is as high as about 81 % and dry contents of the components are 4.8 % protein, 3.6 % lipid, 9.7 % carbohydrate and 0.8 % ash and thus it is high in nutrition. The high contents of moisture and protein are caused by poor squeezing efficiency of soybean milk and high residual content of soybean milk in bean-curd lees.

Bean curd lees have a smell characteristic of soybean and remaining smell causes limitation of application when bean curd lees are used as an industrial resource and prevents its practical use. For example, Patent Document 6 proposes "a method for the preparation of a molding, in which at least one vegetable food residues selected from bean-curd lees, coffee grounds, susoko or chaff are dried to a moisture content of at the most 15 %, preferably 5 to 10 % and furthermore finely pulverized to a size of at the most 30 micron to prepare a mixed pellets comprising a vegetable food residue powder and corn starch, and then the mixed pellets are mixed with a biodegradable plastic of high fluidity in a ratio of 10-50 : 90-50 to a specific gravity of 0.8 to 1.2, and the mixture is injection-molded to prepare a desired molding at low cost.". However, moisture contained in bean curd lees in large quantities should be previously dried uneconomically and the method included no consideration on the smell of bean curd lees in this document.

Patent Document 7 proposes "a complex molding material of vegetable food processing residue comprising a product of dry mechanical pulverization of a mixture of a vegetable food processing residue, a polyolefin and a maleic acid- or maleic acid anhydride-modified polyolefin'.

Further, Patent Document 8 proposes a molding product prepared by a method in which "a food residue and a polyolefin are melt-mixed by applying mechanical energy under dry condition to prevent degradation of quality caused by decomposition of the food residue during mixing'. However, each proposal is a method of mechanical pulverizing of pre-dried bean curd lees while being dried. In the same manner as in Patent Document 6, they should require pre-drying of moisture contained in large quantities and included no consideration on the smell of bean curd lees.

Also. Patent Document 5 proposes a method of giving thermoplasticity to starch and mixing and molding it with a thermoplastic resin. However there is no description of using bean curd lees together and no consideration has been made on the smell.

Polyethylene terephthalate (abbreviated to "PET" hereinafter) is consumed in an amount of about four hundred thousands tons already in Japan as moldings including mainly containers such as PET bottles and its recycle has been proceeded under container recycling law. The PET bottles recollected by municipalities and so are pulverized and washed and circulated as flakes. The flakes are molded by injection molding machines or sheet-molded by extruders to egg packages and reused. Also, a part of flakes is recycled as dimethyl terephthalate by methanolysis with methanol and again polymerized for reuse.

The simplest method for reuse gives a foamed product by injection molding and extrusion molding. However, PET is of high purity and has a sharp melting point and hence it is difficult to be handled in injectionmolding and is brittle and gives low expansion ratios disadvantageously in foam moldings. Patent Document 9 proposes a method in which PET is made to be low melting substantially and broad melting point is given to PET as a method for eliminating processing disadvantages during molding although it is not a method using recycled polyester.

Patent Document 10 describes a proposal of formulating 0.5 to 10 parts by weight of a lactone polymer, 0.5 to30 parts by weight of an epoxidized diene type block copolymer and if required 0.5 to 30 parts by weight of a polyolefin resin per 100 parts by weight of recycled polyester to improve injection moldability, extrusion processability and brittleness of the moldings. However, special separations are required for reuse in repeated recycle when an addition copolymer such as the epoxidized diene type block copolymer which is not a polycondensated polymer is used and it is undesirable for the recycle of resources.

As a low melt viscosity causes a rapid release of foamed gas, Patent Document 11 also describes a method for the preparation of a foamed PET product by adding an acid dianhydride such as pyromellitic dianhydride and a metallic compound of the first, second or third group in the periodic table for branching in order to increase the melt viscosity of PET. However, this proposal cannot change the melting behavior such as the melting point of PET largely and the melt viscosity is changed largely by the temperature disadvantageously.

In the case of gas foaming such as carbon dioxide foaming, as the foaming is simultanuously begun , when the material is extruded from the extruder to atmospheric pressure, it was difficult to adopt a general method for preparing a foamed polystyrol molding method, in which the material is once processed to beads, reheated to fusion-adhere the beads and at the same time it is blown. Also, threre is an environmental problem of ozone layer destruction when a flon compound (Freon^{T}) is used as the foaming agent. A lowly volatile hydrocarbon compound such as acetone is inflammable and it is not suitable as a packaging material for household electric products requiring antiflamability.

The polyester elastomer is well known as a material for compensating the disadvantage of polyurethane of poor weather resistance and is constituted by a hard segment and a soft segment. For example, JP-A-H11-107042 describes a polybutylene terephthalate-polybutylene diol block copolymer prepared by polymerizing of bishydroxypolybutylene terephthalate in the presence of polybutylene diol and these polyester elastomers are commercially available for apparel use as mainly a Spandex fiber.

However, though this raw material shows melting characteristics suitable for the preparation of fibers, the region of high melt viscosity is too narrow for the preparation of foamed product and it has not been used in practical use. Also, as the method for the preparation is melt spinning, it cannot be prepared by wet method which is the method for the preparation of polyurethane foam using a low temperature foaming agent described, for example, in Patent Document 12.

About 75 % of gelatin is prepared from bone marrow of backbone and so of the dangerous part causing mad cow disease (BSE) and its use as the raw material for oral capsule has been prohibited by the Ministry of Welfare and Labor in 2004. Patent Document 13 describes 'an orally dosed capsule not using gelatin, its composition and method for the preparation' and proposes a gelatin-free oral capsule for drugs, cosmetics, bath liquids and diet supplementary foods. The proposed capsule is prepared from a) 8 to 50 weight % of a water-dispersible or water-soluble plasticizer, b) 0.5 to 12 weight % of kappa-carrageenan, c) 0 to 60 weight % of dextrin and 1 to 95 weight % of water. At least 50 weight % of kappa-carrageenan is contained in the composition and it is a gum component for forming or contributing to forming thermoplastic gel and is a polysaccharide collected from seaweeds.

Also, in this proposal, the capsule for use in oral drugs or cosmetics is fully filled by components suitable for the patients and purposes in some cases. This capsule is aqueous and the film consists of a) 8 to 50 weight % of a water-dispersible or water-soluble plasticizer and b) carrageenan. Carrageenan contains at least 50 to 75 weight % of kappa-carrageenan which is a gum forming or contributing to forming thermoplastic gel. The capsule is prepared by a procedure in which such a composition is heated and casted or extruded to a film and then the gel is cooled and the contents are sealed in the gel (which is usually a film). However, this proposal requires kappa-carrageenan which is a special polysaccharide and is disadvantageous economically. Also, the method for the preparation of capsules is limited to wet coagulation process and is disadvantageous in production efficiency.

Patent Document 14 describes "an equipment for the preparation of soft capsules and a method for the preparation". The method for the preparation of capsules by using gelatin uses a rotating die roll. In the equipment, soft capsules filled with materials such as drug solution are prepared from two gelatin sheets. To the curved dent surrounded by the curved right and left outer peripheral surfaces on the upper side between a pair of die rolls 310 and 310 in close vicinity, there is a pair of fallen triangular edge. which is facing each othe and consisting from the right and left curved surfaces of the center of the lower edge of a nozzle segment 320 for supplying the filling material. Between a pair of rotating die rolls, two gelatin sheets 100 are supplied from the upper side and at the same time the filling material is fed from the nozzle hole 322 at the fallen triangular extrusion of the nozzle segment to prepare soft capsules. Plural rows of nozzle holes corresponding to plural rows of capsule pockets 311 of the die roll are provided on the fallen triangular extrusion part of the nozzle segment and the filling material is supplied at a stroke by a plunger pump to the plural rows of capsule pockets of the die roll from the plural rows of nozzle holes in the nozzle segment. The Document describes such an equipment and the method for the preparation.

Also, as a method for the preparation of conventional capsules using gelatin, there is a method for the preparation of hard capsules in which capsule molds are dipped in an aqueous gelatin solution and the aqueous gelatin solution adhered is dried to films. Furthermore, there is a method for the preparation of seamless capsules in which an aqueous gelatin solution is extruded into a coagulating bath by using double or triple complex nozzle dropping method to give coagulated films.
However, these methods for the preparation have been proposed as gelatin has no thermoplasticity and therefore are disadvantageous in productivity and economics. Also no proposal has been made for gelatin-free thermoplastic material suitable for the preparation of capsules without using special polysaccharide.
Patent Document 1: JP-A-2002-204942
Patent Document 2: JP-A-2000-264998
Patent Document 3: JP-A-2001-46093
Patent Document 4: WO 03/014164 A'
Patent Document 5: WO 03/014217 A'
Patent Document 6: JP-A-2001-81201
Patent Document 7: JP-A-2002-186948
Patent Document 8: JP-A-2002-371187
Patent Document 9: JP-A-2000-351117
Patent Document 10: PCT/JP01/06823
Patent Document 11: JP-A-H08-151470
Patent Document 12: WO 01/079323
Patent Document 13: USP 6, 214, 376'
Patent Document 14: JP-A-H11-221267
Nonpatent Document 1: A master's thesis of the graduate of Kochi Institute of Technology in 2002, Kaori Ishikawa "Investigation of effective application of konjak blown powder: Producing resources by using a biological means'

### INDICATION OF THE INVENTION

### PROBLEMS TO BE SOLVED BY THE INVENTION

The subject of the present invention is to provide a method and an equipment which can execute processing of substances such as decomposition, mixing or extraction in high operation efficiency by using supercritical or subcritical carbon dioxide and to provide specific products prepared efficiently by using it, for example, film-formable thermoplastic compositions and moldings, foamed polyester products, medicinal wafers, pharmaceutical and cosmetic thickeners, food thickeners, and edible materials such as gelled products containing polysaccharides such as starch and cellulose as the main component in low price.

Another subject of the present invention is to provide a product which has thermoplasticity, softness and mechanical property practically sufficient as capsules and has proper water-solubility or water-collapsibility as capsules by using a nonthermoplastic material of low-priced polysaccharides such as cellulose and starch as the main raw materials under a condition of no foul odor.

### MEANS FOR SOLVING THE PROBLEMS

The present invention solves the above-mentioned problems by compressing various substances continuously together with carbon dioxide and by processing them as fluids of critical state. And the same time by setting the maximum flow rate in processing at 10 to 1500 m/sec, it is made possible to process a composition containing polysaccharides and proteins as the main components to film-formable (moldable) thermoplastic compositions, to process starch, cellulose, proteins to odorless thermoplastic compositions, and to subject an aromatic polyester to transesterify for giving a reusable foamed product.

For example, a composition containing at least one polysaccharide and protein can be processed to a thermoplastic composition having no foul odor by being processed under the above-mentioned critical state and then being heated and pressurized. In this case, the composition processed under above-mentioned critical state contains preferably a thermoplastic resin and/or a plasticizer.

Such a composition may be preferably processed as a fluid of the above-mentioned critical state and hydrolyzed by being heated and pressurized and then dehydratively polycondensed. When a polysaccharide is used, said composition is preferably added by at least one compound selected from the group consisting of acids and phenols in an amount of 0.01 to 0.5 weight % based on the polysaccharide.

Also, the aromatic polyester can be preferably made to a foamed product containing branched copolymer by being processed as a fluid under the above-mentioned critical state together with a copolymerizing component lowering the melting point and a branching agent.

Such a method can be practiced very efficiently by utilizing the screw type heating and processing equipment according to the present invention.
Thus, the equipment of the present invention is a screw type processing equipment attached an orifice for compressing a substance continuously together with carbon dioxide to a fluid of critical state. It is characterized in that, next to the extruding screw of the raw material feeding part, a vacuum part is provided in which the shaft of said screw is made thin to increase the gap volume between the screw blades (or screw threads) and carbon dioxide is introduced to the vacuum part and further a compression part consisting of screws in which the shaft is made thick to decrease the distance between the blades is positioned next to the vacuum portion and then the thickness of the shaft is made to be substantially same as the inner periphery of the barrel and an orifice is equipped on the surface or the surrounding of said shaft.

In such an equipment of the present invention, the raw material substance can be processed continuously on a series of screws. The material can accept efficiently the action of supercritical or subcritical carbon dioxide, methanol and so by passing it through the above-mentioned compressing part and orifice.
It is preferred the equipment is designed so that the maximum flow rate of the substance passing through the orifice is 10 to 1500 cm/sec.

By designing the twin screw of the raw material feeding part , in which the rotating ratio of the main screw to the subscrew is 1:2 and the arrangement of the adjacent paddles is the difference between 60 and 180 degrees, a low viscosity raw material conventionally difficult to be supplied by a screw can be compressively fed efficiently. In this case, it is preferred to be a twin screw in which a reverse tapered subscrew which rotates reversly and even a low viscosity raw material can be compressively supplied to the main screw of forward taper.
Furthermore, it is preferred to be a partial twin screw structure in which a subscrew reversely rotating by reverse taper is provided next to the orifice to prevent vent-up from the vent caused by low viscosity and to intensify compression and feeding.

Following products can be provided by utilizing the method and the equipment of the present invention.
They include thermoplastic compositions prepared by processing natural resources such as starch, cellulose and proteins, thermoplastic compositions prepared by processing aromatic polycondensates such as aromatic polyesters and moldings such as foamed products, films and capsules, thickeners and gelled products by using them as the raw materials.

The present invention can provide a starch composition having thermoplasticity and at that a composition generating no burnt smell even when heated, that is, a thermoplastic starch composition in which the total amount of generated nitrogen-containing cyclic aromatic component contained in the head space is less than 10 ppm after feeding 10 g of the sample in a 20 ml vial bottle and heating it at 180°C for 1 minute. The nitrogen-containing cyclic aromatic component is generally 5-acetyl-2,3-dihydro-1,4-thiazine, 2-acetyl-tetrahydropyridine, 2-propionyl-1-pyrraline, 2-acetyl-1-pyrroline or acetyl-pyrazine.

Such a starch composition is prepared by adding 0.01 to 0.5 weight % of at least one compound selected from the group consisting of acids and phenols based on the weight of starch to be hydrolyzed and dehydratively polycondensed starch. The starch composition may be blended with a thermoplastic resin. Also, a molding of practical utility such as capsules can be prepared by using this starch composition as the main raw material.

Furthermore, the present invention can provide a biodegradable sheet containing mainly a film-forming polysaccharide and a biodegradable resin and containing 0.01 to 3 weight % of mannose component.

A sheet having practical strength can be prepared by including a mannose component which is a glucomannan-constituting component contained preferably in konjak blown powder. The content of the mannose component is preferably 0.01 to 3 weight %, more preferably 0.05 to 3 weight %. The sheet may contain a plasticizer. As the plasticizer, it is preferred to use at least one selected from the group consisting of glycol, glycerol, sorbitol and their mixture. When konjak blown powder is used, starch contained in konjak blown powder functions as a part of polysaccharide.

Also, the present invention can provide a molding consisting of a thermoplastic resin and a composition consisting of a composition prepared from bean curd lees containing proteins and cellulose in large quantities in which the total generation of hexanal and hexanol contained in the head space after feeding 5 g of sample in a 20 ml vial bottle and heating it at 180°C for 1 minute is at most 5 ppm and as the result a bean curd lees composition molding of practical utility having no foul odor can be provided.

The present invention can provide easily a branched chain polyester copolymer molding of practical utility which is prepared by reacting (A) polyethylene terephthalate (PET) with (B) an aliphatic dialcohol having a carbon number of 1 to 4 and an aliphatic dicarboxylic acid and/or hydroxydicarboxvylic acid or their polymers in the presence of a branching agent and has a melting point peak temperature of 120 to 190°C.

The molding may be prepared by an injection molding, an extrusion molding or an extrusion foaming. The component (B) is used for giving an easily operable and low-priced molding of high Quality by lowering the melting point of PET and may be used in a form of monomer or in the form of polymer such as polybutylene adipate and polybutylene adipate terephthalate. In any event, it is preferred to be made into a molding by being copolymerized with at least part of PET as a branched chain polyester copolymer.

The ratio of the component (A) to the component (B) is not especially restricted. However, the component (B) is preferably 5 to 50 parts by weight, more preferably 10 to 40 parts by weight based on 100 parts by weight of the component (A).

Also, when the molding is a foamed product, it is preferably a gas foamed product having a foaming ratio of 4 to 50 foldings.

Furthermore, the present invention provides a polyester foamed molding consisting of a branched chain polyester copolymer which is prepared by reacting (A) an aromatic polyester (such as polyethylene terephthalate and polybutylene terephthalate) with (B) an aliphatic dialcohol having a carbon number of 1 to 4 and an aliphatic dicarboxylic acid and/or hydroxydicarboxylic acid or their polymers in the presence of a branching agent and has a melting point peak temperature of 150 to 195°C and foaming it in the presence of a photocatalytic titanium oxide and a thermally decomposable foaming agent to give a molding which can be foam-molded at any time by being exposed to UV light or visible light and then heated.

Such a foamed molding can be injection molded or extrusion molded and also provided as beads. The component (B) is used for giving an operable low-priced molding of high quality by lowering the melting point of the aromatic polyester such as PET. The component (B) can be used as a monomer or as a polymer such as polybutylene adipate and polybutylene adipate terephthalate. In any event, it is preferred to be made into a molding by being copolymerized with at least part of PET as a branched chain polyester copolymer.

According to the present invention, a thermoplastic composition consisting of starch, cellulose and proteins as mentioned above can be provided as capsules, medicinal wafers, medical and cosmetic thickeners, food thickeners, and edible materials.

### EFFECT OF THE INVENTION

The method of the present invention can widely and easily execute decomposition, mixing or extraction of a substance. For example, in processing natural substances such as polysaccharides and proteins, foul odor specific to them can be easily removed to prepare sheets and moldings of high mechanical characteristics.

The screw type processing equipment according to the present invention can continuously and totally execute the processing steps such as decomposition, mixing and extraction of a substance under supercritical or subcritical carbon dioxide by utilizing a series of screws. As the processing steps have no many divergences, the facilities are cheap and economically excellent.
Also, by making the raw material feeding equipment to be a twin screw of special structure, a liquid raw material can be supplied and mixed. A raw material causing dilatancy such as starch-water system can be supplied by paddles of different peripheral velocities and thus it is excellent in versatility.

According to the present invention, by using the above-mentioned method and equipment, natural substances such as starch, cellulose and proteins can be easily processed to thermoplastic compositions. Also, aromatic polycondensates such as polyester can be processed to prepare moldings such as foamed products, films and capsules.

Also, according to the present invention, foul odor specific to natural substances contained in the raw material can be removed from the thermoplastic composition to improve its mechanical characteristics. It can be provided at low price as the raw material and the products such as capsules with no danger of BSE and gelled products such as jelly and so.

In the same manner, rubber-like elasticity can be given to foamed products and films prepared by processing aromatic polycondensates such as polyester. Raw material recycled from PET bottles can be also used for excellent ecology.

### BRIEF DESCRIPTION OF DRAWINGS

[Fig. 1] An outlined drawing showing the raw material supplying part and the low pressure carbon dioxide supplying part in an example of the present invention.
[Fig. 2] An outlined drawing showing the compressing part in the example of Fig. 1.
[Fig. 3] An outlined drawing showing the supercritical or subcritical chemical reaction part and orifice part in the example of Fig. 1.
[Fig. 4] An outlined drawing showing the out-taking part of the example of Fig. 1.
[Fig. 5] A graph showing paddle arrangement of the main screw and the subserew in the example of Fig. 1.

### DESCRIPTION OF SIGNS

1 Main screw
2 Subscrew
3 Main gear
4 Subgear
5 Hopper
6 Supporting structure part
7 Supporting structure part
8 Barrel
9 Carbon dioxide nozzle
10 Cooling pipe
11 Bar heater
12 Band heater
13 Band heater
14 Roller
15 Roller holder
17 Orifice
18 Vent hole
19 Vacuum pump suction hole
20 Vent hole lid
21 Die
22 Die hole
23 Main screw paddle
24 Subscrew paddle
25 Vent part main gear
26 Vent part subgear
27 Vent part main screw paddle
28 Vent part subscrew paddle
29 Supporting structure part
30 Supporting structure part
X Raw material supplying part
Y Carbon dioxide supplying part
A Paddle part
B Paddle part
C Compressing part
D Compressing part
E Vacuum part
F Compressing part
G Mixing/shearing part
H Mixing/compressing part
J Staying part
K Roller part
L Orifice part
M Vacuum part
N Compressing part
P Screw end part

### BEST MODE FOR EXECUING THE INVENTION

The equipment according to the present invention will be illustrated by Drawings. The eauiptuent of the present invention is characterized in that, next to the extruding screw (compressing part C) of the raw material supplying part X , a screw (vacuum part E) of the carbon dioxide supplying part Y in which the shaft of said screw is made thinner to increase the gap volume between the screw blades is present, and next to it a screw (compressing part F) in which the shaft is made again thick to make narrow the gap of the blades is positioned, and then the thickness of the shaft is made substantially the same as the inner periphery of the barrel and an orifice part L in which an orifice 17 is present on the surface and the surroundings of said shaft is provided. The substance supplied from the hopper 5 to the raw material supplying part X is supplied continuously to the carbon dioxide supplying part Y while compressed by the screw of the compressing part C and then sent to the screw of the succeeding compressing part F by the screw of the vacuum part E, in which the volume is rapidly changed for evacuation, while receiving the action of carbon dioxide supplied from the nozzle 9.

Together with carbon dioxide, the substance is sent from the carbon dioxide supplying part Y, that is, the vacuum part E to the compressing part F and kept under a pressure condition of supercritical or subcritical carbon dioxide or a condition near to it. Further, the substance can be kept under a pressure condition of supercritical or subcritical carbon dioxide surely in the orifice part L to make the processing such as decomposition, mixing or extraction of the substance .

The shape of the orifice 17 is not especially restricted and it may be a spiral or straight channel provided on the surface of the shaft, a minute gap between the barrel and the shaft, or a common throttle orifice. It is preferred to be designed so that the maximum flow rate by which the substance passes through the orifice under supercritical or subcritical carbon dioxide (defined by the minimum section area of the orifice and the extruded amount) is 10 to 1500 cm/sec.

In such an equipment of the present invention, the raw material supplying part X may be made to be a single screw or twin screw. By being made to be a twin screw, a substance of low viscosity can be very efficiently supplied as the raw material.

In this twin screw, it is designed so that the rotating ratio of the main screw 1 to the subscrew 2 is 1:2 and the arrangement of the adjacent paddles 23, 24 is between 60 and 180 degree difference.

Thus, as to the rates of rotation of the main screw 1 and the subscrew 2. by making the gear ratio of the main gear 3 to the subgear 4 to be 2:1, the subscrew 2 rotates in a velocity twice of the main screw 1 to reverse direction and the raw material substance in the channel of the main screw I is efficiently scraped off by the paddle 24 of the subscrew 2 rotating reversely at a different peripheral velocity to be supplied uniformly. By a constitution in which the taper of the compression part D of the subscrew 2 is made thinner as the point comes nearer to the end, that is reverse taper, a liquid raw material of very low viscosity can be supplied by the main screw 1.

In the case the rotating velocity ratio of the main screw 1 to the subscrew 2 is 2, by restricting the arrangement of the paddles 23 and 24 between 60 and 180 degree difference, collision between the paddles caused by rotations of the paddle part A of the main screw 1 and the paddle part B of the subscrew 2 can be avoided. Especially, 120 degree difference or 140 degree difference is practical for screw processing and preferable. Screw processing comes to be complex when arranged in another period.

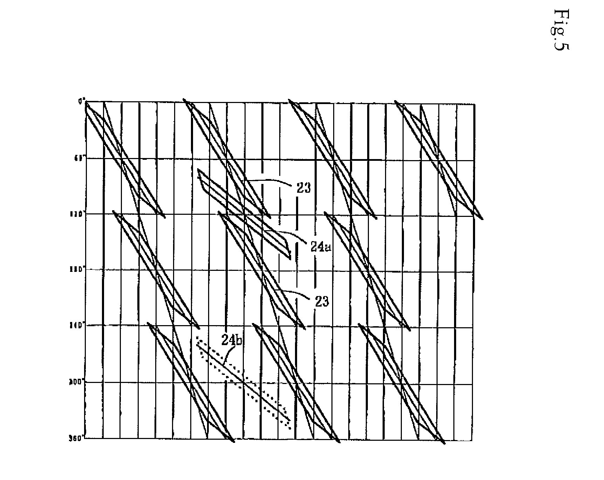

Fig. 5 is an example in which the angle difference of paddle arrangement is 120 degree. It shows that the relative position relationship of the paddles 23 and 24 moves from 24a to 24b when the subscrew 2 rotates once and the main screw 1 rotates half. Thus, the angle difference of 120 degree can avoid collision between the paddles.

The compression ratio of the reverse taper part of the subscrew 2 is preferably 0.9 to 0.5. Also, the compression ratio of the main screw 1 is preferably 1 to 3 to fill the raw material substance in the channel of the screw and to feed it. In the compression part D of the subscrew 2, the raw material substance is fully filled in the single screw by the channel of twice pitch. The fully filled raw material substance can prevent back flow of carbon dioxide through the main screw 1. A cooling pipe 10 can be equipped to the barrel 8 of the vacuum part E so that the temperature in the carbon dioxide supplying part Y does not come excessively high.

In the carbon dioxide supplying part Y. it is preferred the depth of the channel is made large in the same manner as in common vent part and the compression ratio is reduced from 0.7 to 0.3 and the pressure is kept at 50 KPa to 100 KPa to ease supply of carbon dioxide. Though different by the formulated amount, carbon dioxide is Supplied from the bomb through the carbon dioxide nozzle 9 the pressure-adjusting valve and the flow meter. The carbon dioxide nozzle 9 can be controlled by a needle valve to quantitatively supplied carbon dioxide and preferably a check valve is provided in it to prevent back flow of the raw material.

Next to the carbon dioxide supplying part Y (vacuum part E), the mixing/compressing part F is provided. In the compressing part F, a mixing/shearing part G changing periodically the depth of the channel of the screw may be also provided to apply shearing force to the raw material substance. Also, by this structure, sealing effect is given and a pressure condition of supercritical or subcritical carbon dioxide can be obtained more surely. The compression ratio of the compressing part F is preferably 2 to 4. Furthermore, a multi-helical mixing/compression part H can be provided to flow back a part of the raw material and to double it to improve the mixing effect. By making the screw helical line to 2 to 4 lines to transfer partly the raw material from the partial notch part of the blade to the adjacent channel, the material can be doubling-mixed without excessive addition of shearing force and sealed at the same time. The doubling effect can be increased exponentially by the notching frequency and the number of channel lines.

A staying part J can be provided next to the compressing part F. By providing the staying part J, the operating period of chemical action under supercritical or subcritical carbon dioxide condition can be elongated. The size of the staying part J shall be properly decided by the necessary staying period. It can be substituted by the multi-helical mixing/compression part H in some cases.

Next to the staying part J, an eight roller part K exchangeable with the bushing of a proper clearance can be provided to crush the particles which could not be crushed by supercritical or subotitical carbon dioxide chemical action and shearing force and to prevent clogging of the orifice 17.

The orifice part L can be followed directly by an out-taking opening. By making the out-taking part of the main screw 1 to be reverse taper, the pressure can be gradually reduced to enable out-taking at normal pressure. Also, a cooling pipe can be equipped to this portion of the barrel to cool it to a temperature at which it can be easily taken out.

Also, a vacuum part M can be provided next to the orifice part L to take out the processed substance from the vent hole 18 at normal pressure or under vacuum by the vacuum pump sucking hole 19 and to cool it rapidly by evaporation latent heat and then to take out it. In some cases, dehydration or dehydrative condensation can be performed at this stage.

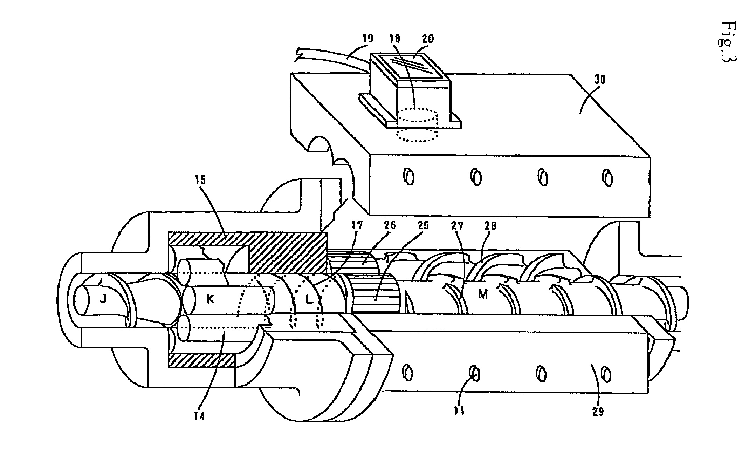

Fig. 3 shows an example in which a subscrew of reverse taper and reverse rotation driven by the main gear 25 and the subgear 26 is partly provided at the part of the vacuum part M. By making the vacuum part to be such a twin axle structure, even in the case the viscosity is lowered by receiving chemical action at the staying part J, the reaction product passing the gap of the gear teeth and being sheared prevents vent-up at the vacuum part M and compression and feed can be efficiently executed. Also, by piling the screw channel on the gear part, the passing quantity can be made larger than that made by the gear channel gap alone while giving gear drive.
It is effective for a material of high moisture content and a material of high MI value. Though the freight shape is most preferably paddle form, full flat form commonly used in the twin screw extruder may be also effective. It is preferred the subscrew paddle 28 is prepared so that the root diameter of screw comes extremely thin to the end to make the flow of the reaction product rapid.

Die 21 is generally used as the out-taking hole. The shape of the die hole 22 in the die 21 is properly selected according to the succeeding step. For example, if the direct succeeding step is preparation of films or sheets, the shape of the die hole 22 is made to be a slit form to make continuous preparation of films and sheets possible. Also, if the succeeding step is discontinuous, the processed substance can be taken out in gut form and cut by a cutter to prepare pellets or it can be extruded to sheet form to prepare square pellets or it can be cut by a hot cutter to prepare round pellets. In some cases, it can be taken out in liquid form.

The compressing parts C, D, the vacuum part E, the compressing part F, the mixing/shearing part G, the mixing/compressing part H, the staying part J, the roller part K, the orifice part L and the vacuum part M mentioned above will be briefly illustrated as follows.
The compressing parts C. D has a structure in which the subscrew comes thinner to the end to ease sending of raw material. Therefore, it is designed so that the pressure in the compressing parts C, D comes higher to 40 to 60 kg/cm². Carbon dioxide supplied by the vacuum part E or steam generated in the compressing part F is sealed in the compressing part C and does not return to the hopper hole.
The pressure in the vacuum part E is lowered to -0. 5 to 1. 0 atm as the raw material flows instantly from the compressing part C of high pressure into the small root diameter of screw. As the channel sectional area of the vacuum part E is large, the molten material does not fill it and is sent to the compressing part F. The raw material in which carbon dioxide is mixed to the molten material fully fills from the compressing part F to its downstream. It is sufficient if the original carbon dioxide pressure at the carbon dioxide nozzle 9 is 5 kg/cm².
When a raw material of high moisture content is flowed, it is cooled by the cooling pipe 10 so as not to generate steam in the vacuum part E. In this case, the bar heater 11 and the band heater 12 are not used or they are set to a temperature enough lower than 100°C.
When a raw material of low moisture content (example: moisture content is 0.05 % in the case of a compound of polylactic acid resin and ECOFLEX) is flowed, the temperatures of the bar heater 11 and the band heater 12 are properly set and the compressing parts C, D are fully filled with the molten resin and carbon dioxide is supplied from the nozzle 9. In this case, water cooling is not required.
In the mixing/shearing part G and the mixing/compressing part H, mixing and shearing are repeated and the molten raw material of high pressure is made to be in the carbon dioxide supercritical or subcritical state for example in part of the compressing part and the staying part J.
Also, the roller part K has a structure in which solid core not finely pulverized are ground down by the main screw and the roll. In the case grinding is not required, the roll can be removed and replaced by an attachment (bushing ).
When carbon dioxide comes to supercritical or subcritical state, fluidity of the molten material comes higher. For example, it has been confirmed the output comes to be 240 kg per hour in the case the channel size of the orifice is 2R of two semicircular channels are present at a screw diameter of 120φ and a screw rotation is 120 rpm.
Dehydration reaction can be made by carrying out desteaming instantly from the vent hole in the vacuum part M.
Shearing action occurred when the raw material passes the main gear 25 and the subgear 26 in the vent part is effective.

Supercritical or sutrcritical carbon dioxide chemical actions include, for example, chemical actions such as chemical decompositions exemplified by hydrolysis, alcoholysis and enzymatic decomposition, mixings such as mixing of fine particles without surface-treated, mixing of a liquid and a polymer, mixing of insoluble polymers without solubilizer, solvent extraction and steam extraction. Catalysts and assistant raw materials may be properly supplied Quantitatively from the raw material supplying part or from the low pressure carbon dioxide supplying part.

Hydrolysis is made by decomposing, for example, polysaccharides (starch, kenaf, bacas, cellulose and so), proteins and fats to low molecular polysaccharides, oligosaccharides, monosaccharides, amino acids and alcohols. As the catalyst, acids are used for saccharides and alkalis are used for proteins, or enzymes such as amylase, peptidase and lipase are used. Though the supercritical condition of carbon dioxide is 31°C and 7 MPa, it is preferred it is reacted at a temperature range causing no inactivation of the enzyme such as 35 to 40 °C under 7 MPa or higher when an enzyme is used as the catalyst. When acids or alkalis are used as the catalyst, a higher temperature enhances reaction efficiency and improves productivity favorably.

Alcoholysis can be made by a procedure in which for example, so-called PET bottles are recollected and pulverized and the resultant flakes are supplied in the chemical reactor of the present invention together with methanol and ethylene terephthalate is alcoholyzed with methanol and recovered as dimethyl terephthalate. After rectified to remove impurities, polyethylene terephthalate can be prepared by again polymerizing methyl terephthalate. Also, poyethylene terephthalate can be prepared in the same manner by using ethylene diol in place of methanol and it is recovered as bishydroxyethylene terephthalate. A higher alcoholysis temperature gives a higher reaction efficiency and improves productivity favorably.

Though mixing of the fine particles in the polymer is usually carried out by using a two-axle extruder after a surface treatment in many cases, mixing of fine particles is difficult. However, in the equipment of the present invention, different from common milling machines, for example, shearing force is applied in the mixing/compression part G under a condition of high polymer viscosity to crush the secondary aggregation of the fine particles and then the fine particles are mixed at a low viscosity of supercritical or subcritical state and therefore no treatment of fine particles before mixing is required.

For mixing a liquid with a polymer, a two-axle milling extruder is commonly used in many cases and a method in which a liquid is added from a proper vent hole under a condition in which the polymer is melted is adopted. However, the two-axle extruder gives a very long staying period according to its structure and a long switching period is required for switching of product grade and is disadvantageous economically. In the equipment of the present invention, the supporting structure parts 6, 7 in the raw material supplying part can be easily removed and washed. Also, as the main screw 1 is of single axle type, the staying period is short and it is advantageous for switching of product grade. In this example, a bar heater 1] is equipped to the supporting structure parts 6, 7. Also, band heaters 12, 13 may be properly equipped to the barrel surface.

For example, orange peel as it is can be fed to the chemical action equipment of the present invention as the raw material to extract limonene from the orange peel. When the extracting temperature is raised near the boiling point of limonene, the extraction efficiency is enhanced to improve productivity favorably. Extracted crude limonene is rectified to raise the purity for use.

The polysaccharide used in the present invention includes cellulose, hemicellulose, starch dextrin and glucamannan. Starch is a three dimensional huge polymer. Its constituents are amylose and amylopectin. Amylose can form a linear polymer, while a three dimensional structure can be formed by amylopectin. As to thermoplasticity, formation of a linear polymer is preferred.

Though the celluloses such as cellulose and hemicellulose are linear polymers and thermoplastic substances such as cellulose acetate and cellulose nitrate are suitable for sheet formation, these processed products are expensive. In the present invention, low-priced nonthermoplastic raw materials such as common dissolving pulp and powder pulp can be used. Starch amylose may be also used as a polysaccharide and it may contain amylopectin if it is in small amount. Oxidized starch and processed starch can be also used. For obtaining stable quality, it is preferred the raw material is decided to be fixed and fluctuation is low. As blown powder contains about 40 weight % of starch, mannose is contained in an amount of 0. 04 to 12 weight % when is supplied by blown powder. Total amount of polysaccharide is preferably 5 to 40 weight %. A low amount of polysaccharide gives a high production cost to be unfavorable economically, while a high amount of polysaccharide causes a low tensile strength unfavorably.

In the starch composition of the present invention, the total generated quantity of nitrogen-containing aromatic compound components contained in the head space after heated at 180°C for 1 minute is lower than 10 ppm. Also, the present invention includes starch compositions blended with thermoplastic resins and moldings prepared by using this starch composition as the main raw material. The total generated quantity of nitrogen-containing cyclic aromatic components contained in the head space after heated at 180°C for 1 minute in the starch composition may be lower than 10 ppm. However, it is preferably lower than 1 ppm, more preferably lower than 0.1 ppm.

Grosch. W reported in Annual Bulletin of Munich Institute of Technology in 1995 that popcorn smell consists of nitrogen-containing aromatic compound components such as 5-acetyl-2,3-dihydro-1,4-thiazine, 2-acetyl-tetrahydropyridine, 2-propionyl-1-pyrroline, 2-acetyl-1-pyrroline and acetylpyrazine and so. Though the aromaticcomponents smell in a very small amount, vapor pressure of the aromatic component is important in the case of a composition. The vapor pressure changes in accordance with type of the aromatic component and solubility of the composition.

The inventor has noticed that these nitrogen-containing aromatic compound components show alkalinity in the same manner as pyridine and has succeeded in lowering the vapor pressures of the aromatic components and removing and decreasing foul smell of starch by neutralizing these aromatic components with acids to form salts.

The compounds used for neutralization include acids such as inorganic acids such as hydrochloric acid, sulfuric acid, sulfurous acid, phosphoric acid, phosphorous acid, nitric acid and nitrous acid; carboxylic acids such as acetic acid, butyric acid, lactic acid, succinic acid, oxalic acid, citric acid, malic acid, ascorbic acid, benzoic acid and cinnamic acid; and phenols such as phenol, p-nitrophenol, cresol, p-nitrocresol, naphthol; and compounds having phenolic hydroxyl groups such as 2,6-dimethoxyphenol, 2,6-dihydroxy-4-methoxyacetophenone, isobutyl p-oxybenzoate, isopropyl p-oxybenzoate, ethyl p-oxybenzoate, butyl p-oxybenzoate, propyl p-oxybenzoate and salicylic acid. They can be use each alone or as a mixture.

Plasticizers can be used as a supplementary means giving thermoplasticity to starch. As the plasticizer, alcohols such as glycol, glycerol and sorbitol are used in many cases. However, an alcohol reacts with said carboxylic type organic acid first to form an ester and does not react with the aromatic component to remain the aromatic component in many cases. On the other hand, an aromatic compound having hydroxyl group showing acidity does not react with an alcohol and therefore it can be used together with an alcoholic plasticizer. Accordingly, when an organic acid is used as a neutralizing agent for the aromatic component, it is required to previously check if the plasticizer does not react with the aromatic component. Some phenols are already designated as food additives and it is more preferred to select them.

The amount of the aromatic component generated from polysaccharides such as starch is very small. Therefore, the amount of the acid required for neutralization shall also be small. For example, as starch is hydrolyzed by an acid, the molecular weight of starch is highly lowered when used in a large quantity and therefore its excessive use shall be avoided. It is preferred the amount of the acid used is between 0.5 and 0.01 weight % based on the weight of starch. An amount of the acid lower than 0.01 weight % cannot avoid perception of foul smell caused by generation of aromatic components. 0.05 to 0.1 weight % is particulaly preferred. As the amount of the acid used for neutralization is small, there is no sanitary problem if it is a specified additive for food additive even when used for food.

For giving thermoplasticity to starch, the known method, for example, described in Patent Document 4 can be used. By formulating an appropriate amount of a neutralizing acid in a higher amount than that required for making it to be an aromatic component when starch is supplied, the starch composition of the present invention can be prepared. For example, Patent Document 4 describes that "By reacting starch with a compound forming an ester group in the presence of water and carbon dioxide under a condition where carbon dioxide comes to be supercritical or subcritical state (for example, at a temperature of 100 to 350°C, preferably 135 to 200°C under a maximum reaction pressure of 7.48 to 29.4 MPa, preferably 15.7 to 23.5 MPa), ester groups can be introduced to part of the main chain of starch.".

It also describes that "The amount of carbon dioxide used can be, for example, preferably 0.1 to 3 weight % based on water. As carbon dioxide acts catalytically during decomposition of starch, it exerts its effect even in a minute quantity.". However, in the case of the present invention using a neutralizing acid, a smaller amount of it decreases lowering of the molecular weight of starch to make it to be of practical utility.

The maximum reaction pressure can be made to be a condition economically milder than Patent Document 1, for example, 2 to 29.4 MPa, preferably 3 to 6 MPa. Though Patent Document 4 describes that "An excessively lower pressure lowers the reaction rate. An excessively higher pressure colors the resultant hydrolytically polycondensed starch and highly lowers its molecular weight and makes it fragile in some cases. The reaction period can be, for example, 1 to 10 minutes, preferably 3 to 5 minutes. An excessively longer period colors the resultant hydrolytically polycondensed starch and highly lowers its molecular weight and makes it fragile in some cases. An excessively shorter period lowers the reaction rate to give no hydrolytically polycondensed starch having sufficient performance in some cases.", we have newly found a pressure not higher than 6 MPa is sufficient for giving thermoplasticity to starch.

It describes that 'The amount of water used is made to be 30 to 80 parts by weight, preferably 50 to 70 parts by weight, together with moisture contained in starch (usually 12 to 13 weight %) based on 100 parts by weight (excluding its moisture) of starch. A lower amount of water used lowers the reaction rate of starch. An excessively higher amount of water lowers the reaction rate of polycondensation and decreases recovery of the molecular weight and the molecular weight of the resultant hydrolytically polycondensed starch tends to be lowered. Also, the energy required for dehydration for recovery of hydrolytically polycondensed starch is increased and it is unfavorable in economics.". We have obtained a same result as it. The acid used for neutralization is dissolved in this water and supplied.

The starch composition of the present invention can be mixed with a biodegradable resin for use. The biodegradable resins include, for example, starch fatty acid esters, starch polyester, cellulose acetate, polyvinyl alcohol, poly(ε-caprolactone-butylene succinate), polycaprolactone, polylactic acid, polylactic acid/diol-dicarboxylic acid copolymer, polyester carbonate, poly-3-hydroxybutyric acid, poly (3-hydroxybutyrate-co-3-hydroxyhexanoate), polyethylene succinate, polybutylene succinate, polybutylene succinate-co-adipate, polybutylene adipate-co-terephthalate and polyethylene terephthalate-succinate etc..

Among them, the biodegradable aromatic resins such as polybutylene adipate-co-terephthalate and polyethylene terephthalate-succinate show high elongation and are excellent in heat resistance favorably. In near future, polylactic acid will come to be most cheap in economics. Also, it is preferred that polylactic acid is formulated in the case of hard feeling being required for the molding. The molding contains 40 to 90 weight % of a biodegradable resin. A smaller amount of the biodegradable resin gives a lower tensile strength, while an amount of it higher than 90 weight % lowers the effect of utilizing starch. It is preferably 45 to 70 weight %.

The moldings consisting of a starch composition of the present invention can be used as edible packaging materials such as medical wafers and capsules by using properly edible raw materials alone and, for example, molding them to films and also can be formulated to foods as edible thickeners and can be used for preparing gelatin-free jellies. Further, by limiting the components after biodegraded to edible components, they can be used as capsules for agricultural fertilizers and seeds.

Moldings consisting of mixtures of starch and a thermoplastic resin according to the present invention can be prepared by molding processes used commonly for thermoplastic resins, for example, extrusion molding, injection molding, inflation film molding, T-die film molding, blow molding and rotation molding and the molding method according to the present invention is not limited to them.

In the present invention, corn smell was measured by a procedure in which 10 g sample is fed in a 20 ml vial bottle and heated at 180°C for 1 minute and then the total amount of nitrogen-containing aromatic compound components such as 5-acetyl-2,3-dihydro-1,4-thiazine, 2-acetyl-tetrahydropyridine, 2-propionyl-1-pyrroline, 2-acetyl-1-pyrroline and acetylpyrazine contained in the head space was measured by a GCMS (gas chromatographic mass spectrograph) in the usual way.

Polyethylene is often used for garbage bags and polyethylene is classified to HDPE (high density polyethylene) and LDPE (low density polyethylene). The catalysts are different each other for them and their physical properties are also different each other. HDPE consists of a linear polymer, while LDPE consists of branched polymers. HDPE is hard, while LDPE is soft. Films prepared from LDPE having proper branches show high elongation and high tear strength and are difficult to be perforated disadvantageously. However, the present invention can provide new films having no such disadvantages.

The inventor has found that the tear strength of a film is improved in the same manner as in polyethylene by formulating water-soluble low molecular glucomannan in a linear polysaccharide prepared by decomposing hemicellulose or starch (for example, dextrin) to complete the present invention. This phenomenon can be thought to be similar to the phenomenon that glucomannan and a polysacharide containing the other cellulose as the main chain and mannose in the side chain (for example, xanthane and acetane) forms thermally reversible fine crystals (6 times symmetry double helical structure) and is made to be a thermally reversible gel and a similar thermally reversible network structure is formed in the composition containing the polysaccharide and thus the tear strength of the sheet is improved. Blown powder of konjak contains a large amount of water-soluble low molecular glucomannan.

The components of blown powder are 4.0 % moisture, 17.0 % proteins, 5.5 % lipid, 8,5 % ash and 60 to 65 % glucide. Glucide contains 20 to 23 % water-soluble components and 40 to 42 % water-insoluble components. Most of the water-soluble components is glucomannan and it contains about 40 weight % of mannose. Most of the water-insoluble components is starch. Glucomannan is contained in konjak fine powder in a larger amount than in blown powder and its use can be considered but it is expensive.

The amounts of proteins, lipid and ash contained in blown powder are low in the preparation of the sheet of the present invention and do not deteriorate substantial physical properties. To give a tear strength of practical utility, the amount of glucomannan is required to be 0.01 weight % or higher as mannose which is a constituent of it. It is preferably 0.05 weight % or higher, more preferably 0.1 weight % or higher. As the content of mannose in blown powder is about 8 weight %, the amount of blown powder used exceeds 35 weight % and the tensile strength of the product is lowered when mannose component exceeds 3 weight %.

In the preparation of a film or a sheet, a plasticizer such as glycols, e.g., ethylene glycol, propylene glycol, isopropylene glycol, butanediol and the like, glycerol, sorbitol or their mixtures can be added. A higher amount of the plasticizer makes the film or the sheet softer, while a lower amount of the plasticizer makes it harder. The amout of the plasticizer may be 0 to 30 weight %, preferably 5 to 20 weight %.

In this case, it is prefered the amount of the plasticizer is lower than half of the sum of the amounts of the polysaccharide and glucomannan. An excessive amount of the plasticizer causes breeding-out of the plasticizer from the molding under highly wet environment in some cases.

Blown powder, a polysaccharide, a plasticizer and a biodegradable resin are dispersed or dissolved in an appropriate amount of carbonated water and stirred at 180 to 230°C under 3 to 7 MPa for 30 seconds to 2 minutes by a known method mentioned above and then dried in a vacuum and molded to powder or pellets.

The above powder or pellets are mixed with various known additives such as a biodegradable resin a coloring agent and a tacking preventor and sheets (films) of the present invention are prepared from the mixture by an inflation film manufacturing machine or a T-die extrusion film or sheet manufacturing machine.

The tensile strength of the sheet (or film) was measured in accordance with ASTM D3368 and the tear strength was measured in accordance with JIS K7128. MI value of the pellet was derived by measuring the resin weight (g) flowed down from an orifice of 2 mm diameter and 10 mm long at 180°C under a load of 2. 16 kg for 10 minutes.

The components causing grassy smell of soybean smell is hexanal and hexanol contained in soybean in a very small amount. They are also contained in bean curd lees and are kept at a distance in the uses other than soybean foods. However, the present invention can provide a molding using bean curd lees by remaining no soybean smell of bean curd lees by modifying or combining hexanal and hexanol in the manufacturing process.

Thus, bean curd lees is mixed with a thermoplastic resin and a diol is formed from hexanal by hydration using an inorganic acid as the catalyst while applying shearing force under supercritical or subcritical condition in the presence of carbon dioxide. Bean curd lees contains proteins and glucides such as starch. Hexanal and hexanol combine with the proteins and glucides and are fixed, and hence the vapor pressure is reduced or substantially eliminated to eliminate soybean smell from the bean-curd composition molding of the present invention.

Though the supercritical temperature and pressure of carbon dioxide are about 31°C and 7 MPa, in this method, hexanal is hydrated under supercritical or subcritical condition of carbon dioxide of 100 to 300°C and 2 to 20 MPa, preferably 150 to 250· °C and 3 to 12 MPa by using an inorganic acid as the catalyst.

Shearing is given by utilizing a shearing force generated between the screw and the chamber by rotation of screw in a single axle extruder. The high polymers such as proteins and starch are broken mechanically by the shearing force to form radicals and the reactivity is made very higher. Hexanol and hexanediol of soybean smell are captured by these radicals and fixed to remove soybean smell from the bean curd lees composition of the present invention.

Though moisture contained in bean curd lees is finally removed, heat generation caused by shearing force is utilized and at the same time dehydration is carried out when rapidly evacuated from high pressure and hence utilization of heat is very efficient and excellent in economics. The moisture content of the bean curd lees composition molding of the present invention is lower than 10 weight % and the molding does not get mildewed and shows no problem during stored. The moisture content is preferably lower than 7 weight %.

Though inorganic acids include, for example, hydrochloric acid, nitric acid, sulfuric acid, sulfurous acid, phosphorous acid and phosphoric acid, the present invention is not restricted to them. The amount of the inorganic acid formulated is preferably 0.5 weight % or lower based on bean curd lees. It is preferably 0.5 to 0.001 weight %, more preferably 0.05 to 0.01 weight %. When an inorganic acid which is a specified food additive such as hydrochloric acid is used, it is preferred as a molding for foods.

As the thermoplastic resin it is preferred to use at least one selected from the group consisting of polyolefin resins such as polyethylene, polypropylene or their copolymers, polystyrol resins such as ABS, polyamide resins, polyester resins and polyurethane resins.

The thermoplastic resin is preferably used so as to be 20 to 90 weight % of the molding. A lower amount of the thermoplastic resin lowers tensile strength of the product when it is made to film to hardly give a product of practical utility, while an excessively high amount of it lowers the effect of bean curd lees used. The preferred amount of the plasticizer used is 30 to 70 weight %.

A plasticizer can be used as a supplementary means for giving thermoplasticity to bean curd lees. As the plasticizer, it is preferred to use alcohols such as glycol, glycerol and sorbitol. The amount of such a plasticizer used is preferably 30 to 100 weight % based on the solid weight of bean curd lees and starch formulated.

Also, in the above molding of the present invention, inorganic compounds such as calcium carbonate, zeolite, talc, diatomaceous earth, Fuller's earth, activated earth and kaolin and organic compounds such as powder pulp and starch can be mixed. Porous zeolite and so is effective for decreasing foul odor. An extender which is an existing food additive can be used by being formulated in the bean curd lees composition molding of the present invention within the range showing no problem for use. Though it can be dry-blended in the case the amount formulated is low, a molding of excellent uniformity can be prepared by preparing a master batch with the thermoplastic resin used and formulating it in the case of that the amount is high. Generally, the amount of the filler formulated is preferably 50 weight % or lower, more preferably 30 weight % or lower based on the total solid weight. It is properly formulated according to its application and the amount is not restricted to these values.

As other additives, tackifiers, tack-preventing agents, pigments, antibacterial agents, antistatic agents and releasing agents can be used within the range showing no problem in the product.

The above-mentioned molding of the present invention can be prepared by various methods commonly used for the thermoplastic resin such as extrusion molding, injection molding, inflation film molding. T-die film molding, blow molding and rotation molding and the molding method for the present invention is not restricted to them.

Soybean smell is measured by a procedure in which 5 g of a sample is fed in a 20 ml vial bottle and heated at 180°C for 1 minute and then the total generated amount of the aromatic components including hexanal and hexanol contained in the head space (referred to the total amount of the aromatic components generated hereinafter) is measure by GCMS (gas chromatographic mass spectrometer) according to the usual manner. When the total amount of the aromatic components generated exceeds 5 ppm, many persons said the molding shows soybean smell in a functional test made by plural panels. As the functional test includes individual difference, the total amount of aromatic components generated is preferably 1 ppm or lower, more preferably 0.1 ppm or lower.

By controlling the moisture content of the thermoplastic starch and the thermoplastic cellulose composition and the amount of the water-soluble plasticizer such as polyols such as glycerol, propylene glycol and ethylene glycol, fatty acids such as stearic acid and myristic acid and their esters, alkali or alkaline earth metals, saccharides such as trehalose, xylitol, sorbitol and sucrose, polysaccharides such as thick malt syrup and dextrin. there can be controllsd hydrophilic property, water-solubility or water-collapsibility of the products such as cosmetic thickeners, food thickeners, medical wafers, edible materials and capsules can be controlled. As hydrophilic property, water-solubility or water-collapsibility required for the product such as capsules are different according to the pharmacological region and use, the above-mentioned additive shall be properly selected.

For example, in the case of that the content of glycerol as the water-soluble plasticizer is 20 weight %, the water-repellency on the product surface of a thermoplastic starch composition can be made to be shown at a moisture content of 1 weight % or lower. Also, surface water-repellency can be shown by revealing a weak cross-linked structure near the surface. When the surface layer is destroyed, the product shows hydrophilic property, water-solubility or water-collapsibility.

For example, from the thermoplastic starch and the thermoplastic cellulose composition of the present invention, soft capsules can be prepared by rotary die-roll method after hot-melt sheet-molded. Also, a hard capsule can be prepared using a common injection molding machine. On the other hand, it can be mechanically pulverized to powder having an average particle size of 200 to 500 microns easily by a centrifugal mill. The powder can be dissolved in water or dispersed to a gel. By being made to be powder, capsules can be prepared by rotary die roll method, multiple dropping method or dipping method used for gelatin in the same manner as for gelatin and the same equipment can be also used.

This powder can be mixed with active components of foods and drugs and can be molded to tablets by a tablet machine. Generally, when starch alone is used as the filler, the tablets are fragile. Hence, it is required to extremely increase the pressure for making tablet or to use proper binders in combination. On the other hand, transparent and hardly breakable tablets can be prepared by using the thermoplastic cellulose composition powder of the present invention and being heated properly during tabletting.

As the tablet products, exemplified are oral refrigerant tablet containing mint, medical tablet and insecticide for cockroach and so. The present invention is not restricted to them. Also, it can be used with starch in combination. When used in combination, the tablet comes to be easily breakable. It is preferably mixed with starch in an amount of 20 weight % or higher. More preferably, it is mixed in an amount of 50 weight % or higher.

Generally, jelly foods are prepared by using gelatin, glucides, perfumes and coloring agents as the main raw materials. Gelatin bears most of food taste. However, gelatin is in danger of BSE as above mentioned and it is not preferred to use it in foods. The thermoplastic cellulose composition can be used as a safe gelatin substitute and a food thickener by using safe edible raw materials only. Contrary to expensive gelatin, cheap pulp cellulose can be used as the raw material to be advantageous in economics. When used as a gelatin substitute, it can be easily handled by being used after pulverized in the same manner as for powder gelatin commonly used.

It can be used as a food thickener in place of gelatin, for example, in ham, boiled fish paste, noodles, soups and confectionaries. The present invention is not restricted to them. Known additives commonly used such as coloring agent, flavor, seasonings such as sweeteners, thickeners such as carrageenan and preservatives can be also used in these products within the range not injuring them.

The proper IV value (intrinsic viscosity) of the main raw material used for the compositions using the polyester of the present invention and moldings such as foamed products and films consisting of the composition is different according to the molding method. A common IV value of recovered PET flake is 0.6 to 0.8. In injection molding, it is preferred fluidity is high and the IV value is low. On the other hand, it is preferred the viscosity of the foamed product is high for lower gas release and the IV value is high.

The melting point of PET shows a sharp melting curve at 250 to 260°C and the melt viscosity is highly changed by the temperature. Such a polymer sensitive to melt viscosity is not suitable for the fluidity of polymer in a mold of complex shape. Also, in a PET foamed product, it has disadvantages that no low temperature extrusion can be made and the viscosity cannot be kept during foaming.

The present inventor has found a molding method in which a copolymer or its raw material monomers and a branching agent are formulated to the main raw material PET and, in the above-mentioned single axle extruder of the present invention, these raw materials are partly decomposed, mixed and exchanged under carbon dioxide supercritical or subcritical condition and again the viscosity is adjusted and it is directly molded to complete the present invention.

The component (B) is a component for making PET lower melting. As the comonomer, exemplified are aliphatic dialcohols such as ethylene glycol, 1,3-propanediol, propylene glycol and butanediol, and aliphatic dicarboxylic acids such as adipic acid and sebacic acid, and hydroxycarboxylic acids such as succinic acid, malic acid and lactic acid. Also, in place of terephthalic acid, isophthalic acid is used in some cases. As mentioned above, these may be supplied in polymer form.

The amount of the comonomer formulated for making the polymer lower melting is different in accordance with the temperature difference for lowering from PET, type and amount of the comonomer, combination and degree of polymerization and also different in accordance with reaction condition, temperature, stirring effect, shearing intensity of the extruder, staying period, pressure, carbon dioxide concentration and moisture content. Therefore, it cannot be said nnconditionallv but it can be selected properly. An apparent melting point used in the present invention lower than 120°C gives a poor heat resistance of the resultant molding and it cannot be used for common molding use. Also, when the apparent melting point peak exceeds 190°C, it give poor lowering of melting point and temperature dependence of fluidity and viscosity expected in the present invention comes too high.

As the branching agent, exemplified are polybasic acids such as trimellitic acid, trimesic acid and pyromellitic acid and acid dianhydrides such as pyromellitic anhydride. Also, exemplified are polyhydric alcohols such as pentaerythritol, glycerol and sorbitol. In the case the molding is used for food packaging, those listed up as food additives such as glycerol and sorbitol are preferred. The amount of the branching agent added shall be properly selected and it is preferably 0.1 to 5 weight % based on the total weight.

Supercritical condition of carbon dioxide is 31.8°C and 7.2 MPa and subcritical condition of 100°C or higher and 2 MPa or higher can be also used. A copolymer having a branching, a viscosity and a melting temperature suitable for use in the present invention can be prepared by mixing the above-mentioned raw materials and the branching agent and subjecting them to an exchange reaction under supercritical or subcritical condition of carbon dioxide.

The exchange reaction condition is at the melting point of PET of 250°C or higher and under 2 MPa or higher. The extruding condition is selected suitable for the molding. Thus, the temperature is relatively high for injection molding, while relatively low for extrusion molding. It is extruded near the apparent melting point for the foamed product.

It is preferred to add a foaming core agent in foaming. It is exemplified by inorganic substances such as barium sulfate, magnesium carbonate, calcium carbonate, titanium oxide, diatomaceous earth, talc, bentonite and Fuller's earth. These inorganic substance used are fine powder and have a size of about 1 micron or less even when secondarily aggregated. When it exceeds I micron, the strength of finely foamed cell membrane lower than 10 microns is lowered to give no independent bubbles. In the case of extremely high foaming, the foamed cell membrane thickness comes to be about 1 micron and it is preferably 0.3 micron or less. The amount of the foaming core agent formulated correlates reversely to the size of foamed cell and is 0.01 to 2 weight % based on the resin weight.

The foaming extruder has preferably a constitution in which the screw portion is constituted by raw resin-supplying part, compressing part, carbon dioxide supplying vacuum part, compressing/milling part, back flow preventing part, compressing part and measuring part, and the material goes to the die through an adaptor.

The temperature condition in the foaming extruder is preferably in such a condition that the temperature of the raw resin supplying part is same as the resin melting temperature, the temperature of the compressing part is higher than the resin melting temperature by 10 to 20°C, that of the vacuum part is same as the resin melting temperature, that from the compressing/milling part to the adapter is higher than the resin melting temperature by 20 to 50°C, and that of the die output is higher than the resin melting temperature by -30 to 10°C.
Also the pressure before the die is preferably 15 MPa or higher, more preferably 20 MPa or higher to increase the foamed cell density and to enhance the expansion ratio.

The amount of carbon dioxide fed is 1 to 5 weight % based on the resin amount. It depends on the expansion ratio. It aims 1.5 to 2 weight % for a ratio of 10 and 2 to 3 weight % for a ratio of 20.

The injection molding machine is preferably used not by direct molding but by previous pelletizing. The pelletizer has preferably a constitution in which the screw part is constituted by raw resin-supplying part, compressing part, carbon dioxide supplying vacuum part, compressing/milling part, back flow preventing part, compressing part and measuring part and the material goes to the die through an adaptor. In the case of injection molding, it is preferred some carbon dioxide remains in the pellet as it does not deteriorate the physical property and improves fluidity.

The present invention does not preclude the use of commonly used additives such as heat-resistant or light-resistant stabilizers, coloring agents and antibacterial agents commonly used in injection-molded products and foamed products. Also, it can consider safety so as not to be touched directly by foods by making it to a multilayer structure and by limiting the part using recycled PET raw material to the inner layer.

In the present invention, the melting point was measured by using a differential scanning calorimeter (DSC) under nitrogen atmosphere at 20°C/min. The IV value was measured in a metacresol solution.

Also, the present inventor has found a molding method in which a component for making an aromatic polyester low-melting is copolymerized with said polyester and, at the same time or about that time, a branching agent, photocatalytic titanium oxide and a thermodegradable foaming agent are formulated and, in the above-mentioned single axle extruder of the present invention, under supercritical or subcritical condition of carbon dioxide lower than the decomposition temperature of the thermodegradable foaming agent, these raw materials are partly decomposed, mixed and exchanged and the viscosity is again adjusted and it is directly molded to complete the present invention.

Photocatalytic titanium oxide has a crystal structure of anatase type and is excited by UV ray. Akio Komatsu of Osaka Municipal University has already developed a photocatalyst excited by visible light of 407 nm by carrying platinum of nano scale on titaium oxide of rutile type crystal structure. These photocatalytic titanium oxides can be used also as the foaming core agent. The amount of photocatalytic titanium oxide formulated is 0.01 to 2 weight % based on the resin weight.
It can be a modified photocatalytic titanium oxide in which apatite is partly adhered to photocatalytic titanium oxide.

Photocatalytic titanium oxide decomposes organic substances in interposition of water to generate oxygen and carbon dioxide. The oxidizing force of oxygen generated is high, Generation of radicals and transfer of electrons are carried out in this reaction. Most of the thermodegradable foaming agents are azo compounds such as 5-phenyltetrazol. Decomposition of the azo compound is promoted by transfer of radicals and electrons supplied from the photocatalytic titanium oxide and it is decomposed at a temperature lower than usual decomposition temperature to form gases such as nitrogen.

The resin contains moisture and the equilibrium moisture of PET and so is some hundreds ppm sufficient for photocatalysis.

In the present invention, the thermodegradable foaming agent is mixed with the resin at a temperature not higher than the decomposition temperature of the agent and the mixture is extruded to beads and light is irradiated to the beads and an intermediate state of transfer of radicals and electrons is held in the beads and it is reheated at necessary time and can be molded at as high an expansion ratio as 4 to 50. For example, though the decomposition temperature of 5-phenyltetrazol is 230 to 280°C , the resin can be bead-molded at a temperature lower than 200°C and then irradiated by light and molded at a high expansion ratio at a low temperature lower than 200°C. An aromatic polyester resin has a high viscosity change by temperature. When the viscosity is lowered, foaming gas is easily released to give only a product of low expansion ratio.

The thermodegradable foaming agents have various decomposition temperatures as seen in said azo compounds such as p,p'-oxybisbenzenesulfonyl hydrazide, dinitrosopentanetetramine, 5-phenyltetrazol, bistetrazol diammonium, bistetrazolpiperazine, bistetrazoldiguanidine, azobistetrazolguanidine, azobistetrazolaminoguanidine and azodicarbonamide.

Also, polyoxymethylene can be used as a thermodegradable foaming agent. Though polyoxymethylene generates formaldehyde gas when thermally decomposed, it is oxidized by a photocatalyst and decomposed to water and carbon dioxide and thus problems in safety are eliminated.

The foaming extruder has preferably a constitution in which the screw portion is constituted by raw resin-supplying part, compressing part, carbon dioxide supplying vacuum part, compressing/milling part, back flow preventing part, compressing part and measuring part and the material goes to the die through an adaptor.

The temperature condition in the foaming extruder is preferably in such a condition that the temperature of the raw resin supplying part is same as the resin melting temperature, the temperature of the compression part is higher than the resin melting temperature by 10 to 20°C, the temperature of the vacuum part is same as the resin melting temperature, the temperature from the compressing/milling part to the adaptor is higher than the resin melting temperature by 20 to 50°C, and the temperature of the die output is higher than the resin melting temperature by -30 to 10°C.
Also, the pressure before the die is preferably 15 MPa or higher, more preferably 20 MPa or higher, to increase the foamed cell density and to increase expansion ratio. In the case of preparing beads, the pressure is made low to prevent foaming and quenched by an underwater cutter.

In the case of using gas foaming together, the amount of carbon dioxide fed is 0.1 to 5 weight % based on the resin amount. Though different according to gas expansion ratio, it aims 1.5 to 2 weight % for an expansion ratio of 10 and 2 to 3 weight % for an expansion ratio of 20, The effect of supercritical carbon dioxide can be obtained by carbon dioxide in an amount of 0.1 weight % based on the resin amount.

The injection molding machine is preferably used not by direct molding but by previous pelletizing. It can be used by dry-blending the foamed master batch. The pelletizer has preferably a constitution in which the screw part is constituted by raw resin-supplying part, compressing part, carbon dioxide supplying vacuum part, compressing/milling part, back flow preventing part, compressing part and measuring part and the material goes to the die through an adaptor. In the case of injection molding, it is preferred some carbon dioxide remains in the pellet as it does not deteriorate the physical property and can prevent generation of sink mark and improves fluidity.

The present invention does not preclude the use of commonly used additives such as heat-resistant or light-resistant stabilizers, coloring agents and antibacterial agents commonly used in injection-molded products and foamed products within the range not affecting badly to molding. Also, it can consider safety so as not to be touched directly by foods by making it to a multilayer structure and by limiting the part using recycled PET raw material to the inner layer. In the case it is made to be multilayer structure, gas release can be prevented during foaming by increasing melt viscosity of the surface layer to give a molding of high expansion ratio easily. As the viscosity of the ester condensate is affected largely by the temperature unlike polyolefins, prevention of gas release during foaming is preferably high when the difference of melting points between the surface layer and the inner face layer is not lower than 20°C.

It is required to foam in molten state and to enlarge the high viscosity region to prevent gas release by increasing the molecular weight of the polyester elastomer. However, the molecular weight is lowered easily if it is remelted even if the molecular weight is high during polymerization. Though here is a method for making branches in the high polymer chain by, for example, pyromellitic acid to enlarge high viscosity region, if the branching reaction is carried out during polymerization, the reaction period is long and the shearing force is small and therefore branching is difficult to be controlled and branching proceeds excessively to cause crosslinking and therefore it forms three-dimensional structure in an extreme case and fluidity is lowered and it comes not to be taken out. In the present invention, branching is made by radical reaction caused by the radicals formed during cleavage and by transesterification and shearing force while giving shearing force under supercritical condition of carbon dioxide and therefore the molecule is properly cleaved by shearing force before being abnormally made to be a three-dimensional structure to keep proper fluidity.

The foamed products of the present invention can be prepared from an elastomer material. The hard segment is an aromatic polyester such as polyethylene terephthalate, polytrimethylene terephthalate, polybutylene terephthalate, polyethylene naphthalate and thier block mixtures. As the soft segment, they may be used in also polyurethane, for example polyalkyl ethers (such as polyalkylene glycols, e.g., polyethylene glycol, polypropylene glycol, polytetramethylene glycol and the like), polyalkyl esters (such as polyalkylene esters, e.g., polyethyl adipate, polybutyl adipate and the like), polyalkyl carbonates (such as polyalkylene carbonate glycols, e.g., polybutylene carbonate diol, polypropylene carbonate diol and the like) . The elastic behavior of the elastomer is changed by the ratio of hard segment to soft segment and it can be controlled. The ratio commonly used is about 1:1 and it is 2:1 to 1:2 in many cases. The molecular weight of soft segment is about 2000 in many cases and the elastic behavior of the elastomer is different according to its type. The foamed products are made to final products by keeping independent bubbles in most cases. However, it is used in the form of continuous bubbles in special cases such as a case air permeability is required.

### EXAMPLES

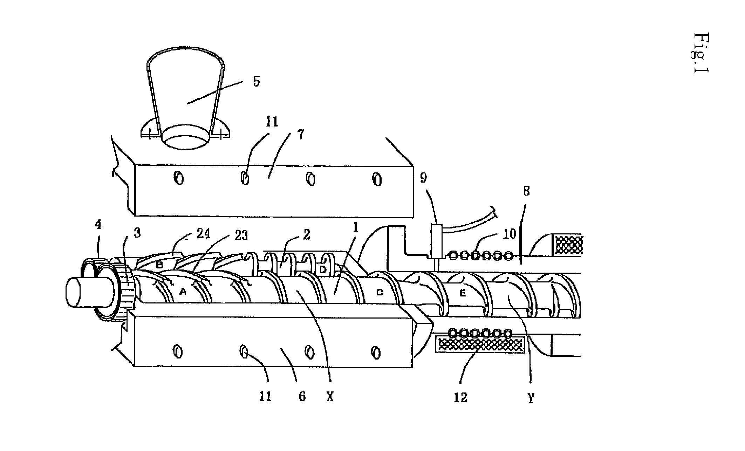

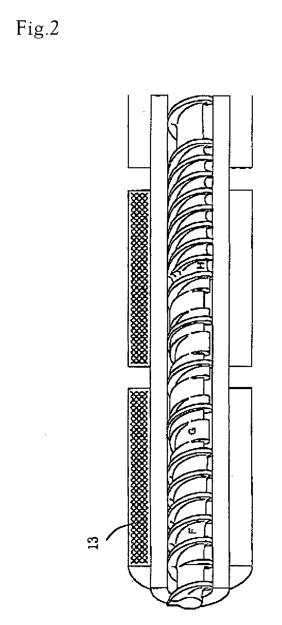

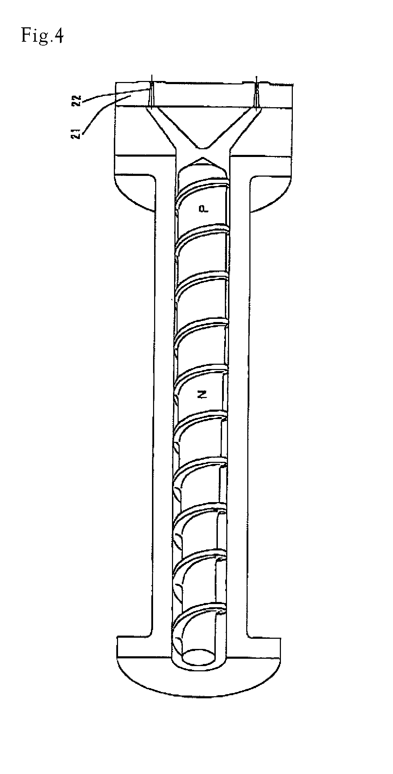

Now, Examples of the present invention will be illustrated. As the examples of equipment, equipments consisting of a series of screws shown in Figs. 1 to 4 were used (the diameters of main screw 1 and subscrew 2 are 50 mm, and the paddle angle difference is 120 degree).

### [Example 1] - The velocity passing through the orifice, Example of equipment (Modification):

Kenaf tips predried to a moisture not higher than about 10 weight % and cut to about 3 mm long were used as the main raw material and fed from the hopper at a rate of 5 to 50 kg/hour. Carbon dioxide of 5 KPa was injected from the carbon dioxide nozzle 9 at a raw material ratio of 0.05 weight %. It was decomposed during a staying period of 6 seconds in the staying part J under supercritical carbon dioxide condition of the staying part J at 200°C under a pressure of 12.9 MPa to make it to low molecular weight and then it was passed through an orifice 17 of 1 mm diameter. The velocity passing through the orifice was 1274 cm/sec.
After left the orifice 17, evacuation and dehydration were carried out from the vent hole 18 with a water-sealed vacuum pump. The kenaf made to low molecular weight was polycondensed to increase the molecular weight. After compressed to 1 MPa in the compression part N, it was extruded from the round dies hole of 1 mm diameter and round thermoplastic pellets were prepared by a hot cutter. The thermoplastic pellets could be used as an adhesive for kenaf nonwoven fabric.

### [Comparative Example 1]

When an orifice 17 of 0.8 mm diameter was used, supply of carbon dioxide from the low pressure carbon dioxide supplying part Y came to be difficult before the velocity passing the orifice came to be 1990 cm/sec. Inevitably, the revolution of the main screw 1 was required to be lowered for operation and the productivity was remarkably lowered.

### [Example 2]- The velocity passing through the orifice, Example of equipment ( Mixing )·:

The roller holder 15 in the equipment of the present invention used in Example 1 was replaced by a bushing of a clearance of 0.5 mm, and the die hole 22 was changed to a die 21 of 20 mm diameter, and the vacuum part M was changed to partial two axle structure and an underwater cutter was used. Pellets of a styrene/butadiene/styrene block copolymer of 30 mm diameter as the raw material and a wax which is liquid at room temperature as an auxiliary raw material were used in a weight ratio of 70:30 and supplied from the raw material feeding part X at a rate of 50 kg/hour. The feeding condition of raw material was good and back flow of wax was not observed. Also, feeding condition at the vacuum part M was good and no vent-up from the vent hole 18 was observed. Feeding amount could be kept in spite of low viscosity product.

The material was mixed in the staying part J at 150 °C under a pressure of 2.3 MPa in subcritical carbon dioxide condition. The velocity passing through the orifice was 17.7 cm/sec. The resultant mixed pellets were sliced and observed by a phase optical microscope and, as the result, it was confirmed the wax was dispersed finely to a distribution not higher than 1 micron.

Then, the ratio of the raw material to auxiliary raw material was changed to 60:40 and sampled each 1 minute and the ratio was measured by a liquid chromatograph and the period for switching of the ratio was measured. It was confirmed the ratio of the mixed pellets was switched to the specified ratio after 12 minutes.

### [Example 3] - The velocity passing through the orifice. Example of equipment (Extraction) :

The die 21 of the equipment of the present invention used in Example 1 was removed before use. The peel of the raw material orange was used as it is and limonene was extracted from it. It was extracted at 130 °C under a pressure of 3.9 MPa in the staying part J in subcritical condition of carbon dioxide and passed through 12 orifices 17 of 1 mm diameter. The velocity passing though the orifices was 101 cm/sec. It was not sucked in the vent hole 18 and cooled by adiabatic expansion during the transfer from the orifice 17 to the vacuum part M and the extracted mixture was taken out.

The extracted mixture was fed in a wringer and the squeeze was rectified to purify limonene. The yield of purified limonene was as high as 89 weight % based on the amount of limonene contained in the raw orange peel.

### [Comparative Example 2]

When the bushing was replaced by one of 1 mm clearance, the velocity passing through the orifice came to be 9 cm/sec and the pressure came to be lower than 1 MPa and the yield of limonene was lowered to 64 weight %.

### [Example 4]- Preparation of a thermoplastic film from starch

100 parts by weight of commercial corn starch, 50 parts by weight of deionized water, 50 parts by weight of glycerol which is a specified food additive, 0. 1 parts by weight of phenol which is a specified food additive and 1 part by weight of carbon dioxide were mixed together and the mixture was fed to a single axle extruder with a 50 mm double vent. It was released from the vent hole and dehydrated by a water-sealed pump. Starch was hydrolyzed at a maximum temperature of 190°C under a pressure of 2.9 MPa and then released suddenly at a velocity passing through the orifice of 828 cm/sec and dehydratively polycondensed. The total staying period was made to be 3 minutes and the raw material feeding velosity was made to be 50 kg/hour. The starch composition of the present invention was filtered through a 100 mesh filter and then extruded from a nozzle of 1 mm diameter and pelletized by a hot cutter. No popcorn smell was felt during pelletizing. The resultant pellets showed a good thermoplasticity as shown by the MI value (at 180°C) of 12. The total amount of nitrogen-containing aromatic components generated in the pellet was lower than 0.1 ppm.

The pellets were mixed with an aromatic biodegradable resin manufactured by BASF "ECOFLEX" in a weight ratio of 40:60 and the mixture was dry-blended with 0.3 weight % of erucamide as the tacking preventor and made to a film of the present invention having a thickness of 50 µm at an extruding temperature of 170°C by using an inflation film manufacturing machine with a nozzle diameter of 10 cm. The resultant film had a tensile strength of 24 MPa and an elongation of 340 % showing enough practical mechanical properties for use as garbage bag. Also, it had enough heat-seal strength. During forming film and in the obtained film, no popcorn smell was felt.

### [Comparative Example 3]

Only phenol was excluded from the formula in Example 4 to prepare pellets. During pelletizing, strong popcorn smell was felt. The total amount of nitrogen-containing aromatic components generated in the pellet was 15 ppm. Also, popcorn smell remained highly in the film prepared.

### [Example 5] - Preparation of a thermoplastic film from starch

Four starch compositions were prepared by the method same as in Example 4 only except that the amount of phenol formulated was changed to respectively 2 parts by weight, 1 part by weight, 0.02 part by weight and 0.01 part by weight.
In the case of 2 parts by weight of phenol, the molecular weight of starch was highly lowered. During preparation, no popcorn smell was felt but it could not be pelletized.
In the case of 1 parts by weight of phenol, no popcorn smell was felt during preparation and it could be pelletized. The total amount of nitrogen-containing aromatic components generated in the pellet was lower than 0.1 ppm.
In the case of 0.02 parts by weight of phenol, no popcorn smell was felt during preparation and it could be pelletized. The total amount of nitrogen-containing aromatic components generated in the pellet was 0.15 ppm.

### [Comparative Example 4]

In the case of 0.01 parts by weight of phenol, the total amount of nitrogen-containing aromatic components generated in the pellet was 13 ppm. Popcorn smell remained in a film prepared by mixing the pellets with an aromatic biodegradable resin "ECOFLEX" in a weight ratio of 50:50.

### [Example 6] - Preparation of a thermoplastic film from starch

A method same as in Example 4 only except that an equivalent quantity of 10 % hydrochloric acid which is a specified food additive was used in place of phenol was carried out to prepare pellets. Also, in the present Example, no popcorn smell was felt and the total amount of nitrogen-containing aromatic components generated in the pellets was lower than 0.1 ppm. Also, a film of 40 µm thick prepared only with the pellets had no popcorn smell.

### [Example 7] - Preparation of a thermoplastic film from pulp and blown powder

30 parts by weight of a commercial needle leaf tree dissolving pulp (containing 92.3 weight % of α-cellulose), 10 parts by weight of blown powder containing 8.4 weight % of mannose, 15 parts by weight of glycerol, 45 parts by weight of pellets of an aromatic biodegradable resin manufactured by BASF "ECOFLEX (trademark )" (MI value at 180 °C: 5), 0.5 parts by weight of erucamide as a tacking preventer and 20 parts by weight of deionized water were mixed together in a Henschel mixer and the mixture was melt-mixed in a continuous reactor having screws at a maximum temperature of 180°C under a maximum pressure of 3.5 MPa for 90 seconds and vacuum-dehydrated at a velocity passing through the orifice of 828 cm/sec and then flowed out from a nozzle of 1 mm diameter at a die temperature of 150 °C under a pressure before the die of 0.9 MPa and the obtained gut was water-cooled and cut by a cutter and molded to pellets of a size of 30 pieces/g. The MI value of the pellet was 6 at 180°C.
An inflation film of the present invention having a thickness of 40 µ m was prepared by using the above-mentioned pellets as the raw material and by using an inflation film manufacturing machine having a die of 10 cm diameter at a temperature of the extruder of 160°C and a blow ratio of 4 and the tensile strength in width direction, the elongation and the tear strength in machine direction were measured.

### [Comparative Example 5]

An inflation film was prepared by using the components same as in Example 7 except that cornstarch was used in place of blown powder.

The mechanical characteristics of the films prepared in Example 7 and Comparative Example 5 are shown as follows.

| | Tensile Strength MPa | Elongation % | Tear strength kg/mm |
|---|---|---|---|
| Example 7 | 45 | 320 | 18 |
| Comparative Example 5 | 38 | 280 | 5 |

### [Examples 8 to 10, Comparative Example 6]

### - Preparation of a thermoplastic film from pulp and blown powder

Inflation films of the present invention having a thickness of 40.µm were prepared by using pellets prepared in the same manner as in Example 7 except that the amounts of dissolving pulp, blown powder and cornstarch were varied
as the raw materials and the tear strengths in machine direction were measured.

| | Dissolving pulp (wt. parts) | Blown powder (wt. parts) | Cornstarch (wt. parts) | Mannose (wt. %) | Tear strength (kg/mm) |
|---|---|---|---|---|---|
| Example 8 | 30 | 1 | 9 | 0.08 | 8 |
| Example 9 | 20 | 20 | 0 | 1.64 | 14 |
| Example 10 | 10 | 30 | 0 | 2.52 | 11 |
| Comp. Ex. 6 | 0 | 40 | 0 | 3.36 | 6 |

### [Example 11] - Preparation of a thermoplastic film from pulp and blown powder

80 parts by weight of the pellets prepared in Example 7 were mixed with 20 parts by weight of polylactic acid having a MI value of 12 to prepare an inflation film of the present invention having a thickness of 40 µm and the tensile strength in width direction, the elongation and the tear strength in machine direction were measured.

| | Tensile strength (Mpa) | Elongation (%) | Tear strength (kg/mm) |
|---|---|---|---|
| Example 11 | 58 | 180 | 12 |

The film of Example 11 showed a lower elongation and a higher strength and harder hands than the film of Example 8 by formulating polylactic acid.

### [Example 12] - Preparation of a thermoplastic film from bean curd lees

100 parts by weight of bean curd lees containing 80 weight % moisture, 5 parts by weight of glycerol which is a specified food additive, 0.1 part by weight of 10 % hydrochloric acid which is a specified food additive and 20 parts by weight of an aromatic biodegradable resin manufactured by BASF "ECOFLEX (trademark)' were mixed together and the mixture was fed in a 50 mm single screw extruder with double vent. Hexanal and hexanol contained in bean curd lees were reacted and fixed at a maximum temperature of 190°C under a maximum pressure of 2.9 MPa and then released suddenly from the first vent hole at a velocity passing through the orifice of 828 cm/sec and dehydrated from the second vent hole. The total staying period was made to be 3 minutes and the feed rate of raw materials was made to be 50 kg/hour. The composition of bean curd lees was filtered through a 100 mesh filter and then extruded from a nozzle of 1 mm diameter and pelletized by a hot cutter. During pelletizing, no soybean smell was felt. The resultant pellets showed a good thermoplasticity of MI value of 7, which were extruded from an orifice of 2 mm diameter and 10 mm long at a load of 2.16 kg for 10 minutes (at 180·°C ).

0.3 weight % of erucamide as a tacking preventer was dry-blended to the pellets and a film of 50 µm thick was prepared at an extrusion temperature of 170 °C by using an inflation film manufacturing machine of a nozzle diameter of 10 cm. The resultant film showed a tensile strength of 19 MPa and an elongation of 310 %, which were practically sufficient mechanical properties. During and after film-forming, no soybean smell was felt. The total amount of the smell components formed was lower than 0.1 ppm.

### [Comparative Example 7]

A film was prepared by the same method as in Example 12 only except that hydrochloric acid was not used. In this method, high soybean smell was formed during film-forming and the total amount of smell components generated in the resultant film was 19 ppm to leave soybean smell.

### [Example 13] - Preparation of a thermoplastic film from bean curd lees

The method same as in Example 12 was carried out by varying the amount of hydrochloric acid used.
(1) Amount of 10 % hydrochloric acid formulated: 2 parts by weight
   In this case, the molecular weight of bean curd lees composition was highly lowered. Though no soybean smell was felt during preparation, it could not be pelletized.
(2) Amount of 10 % hydrochloric acid formulated: 0.2 parts by weight
   In this case, no soybean smell was felt during the preparation and a film of the present invention could be prepared. The total amount of smell components formed in the film was lower than 0. 1 ppm.
(3) Amount of 10 % hydrochloric acid formulated: 0.02 parts by weight.
   In this case, no soybean smell was felt during the preparation and a film of the present invention could be prepared. The total amount of smell components formed in the film was 0.04 ppm.

### [Comparative Example 8]

In the case the amount of 10 % hydrochloric acid formulated was made to be 0.005 parts by weight, the total amount of smell components generated in the film was 8 ppm and soybean smell remained also in the prepared film.

### [Example 14] - Preparation of thermoplastic pellets and plates from bean curd lees

Pellets were prepared by the same method as in Example 12 only except that "ECOFLEX (trademark )' was increased to 60 parts by weight and glycerol to 20 parts by weight and further 20 parts by weight of potato starch was added as the extender and the amounts of hydrochloric acid and carbon dioxide were doubled. A stepped plate for test having a thickness of 3 mm was prepared from the pellets at a die temperature of 190 °C by using an experimental injection molder with a vent connected to a vacuum pump. This plate showed no shrinkage nor generation of flash. During pelletizing and plating, no soybean smell was felt. The total amount of smell components formed in the fragments cut to 3 mm square from the plate was lower than 0.1 ppm,

### [Example 15] - Preparation of a thermoplastic film from bean curd lees

An inflation film of 80 µm thick was prepared from a bean curd lees composition by the same method as in Example 14 only except that propylene having a MI value of 1 was used in place of "ECOFLEX (trademark)". Also in the present Example, no soybean smell was felt during preparation of the film to give a film of practical utility. The total amount of smell components formed in the film was lower than 0. 1 ppm

Now, Examples of preparation of polyester foamed products will be shown. In these Examples, the melting point was measured by a scanning differential calorimeter (DSC) under nitrogen atmosphere at a rate of 20 °C/min. The IV value was measured in m-cresol solution.

### [Example 16] - Preparation of a polyester foamed product

100 parts by weight of PET flakes having an IV value of 0.73 prepared from recycled PET bottles as the main raw material, 1 part by weight of pyromellitic acid dianhydride as the branching agent, 1 part by weight of titanium oxide powder having a particle size of 0.3 to 0.4 microns as the foaming nuclear agent and 30 parts by weight of polybutylene adipate pellets having an IV value of 0.12 for making the melting point lower were dry-blended in a rotary blender. Then, the mixture was vacuum-dried at 80°C for 24 hours to a moisture content not higher than 100 ppm and, while nitrogen-purged, stored in an aluminum bag and quantitatively supplied from the raw material supplying part purged by nitrogen for the preparation of the foamed product.

The screw had a diameter of 50 mm. The foaming extruder was constituted by a raw resin supplying part, a first compressing part, a carbon dioxide supplying vacuum part, a compressing/mixing part, a backflow preventing part, a second compression part and a measuring part and T die process was adopted in which the material was extruded from a dies of a slit width of 0.4 mm and I m long through an adaptor. The first compressing part was set to 260°C, the carbon dioxide supplying part to 240°C, the compressing/milling part to 250°C, the backflow preventing part to 200°C, the second compressing part to 180°C, the measuring part and the adaptor to 150°C, the pressure before the die to 18 MPa, the die part to 130°C and the velocity for passing the orifice to 828 cm/sec. Carbon dioxide was compressed and supplied in an amount of 3 weight % based on the total resin amount. Under carbon dioxide supercritical condition, after transesterification, the extruded foamed sheet was cooled by a chilled roller and then reheated to 80°C and, while increasing the expansion ratio, its thickness was controlled by a roller and it was molded to a foamed sheet of an expansion ratio of 25 and 10 mm thick and a foamed product containing polyethylene-butylene-adipate-terephthalate branched copolymer of the present invention was wound.

A fragment was cut from the foamed product of the present invention prepared and it was photographed by an optical microscope and the number of bubbles per unit volume was measured. Also, a water resistance test was carried out against a water column of I m high. As it showed no water leakage, it was confirmed independent bubbles were formed in the foamed product of the present invention. As the result of measuring DSC of the foamed product, the melting point peak was 146°C. As the result of measuring the consumed amount of potassium permanganate of the foamed product by the elution test for the standard for apparatus and container package in accordance with the Notification No. 370 of the Ministry of Health and Welfare, safety as a food container was confirmed as the value was not higher than the specified one.

### [Example 17]

A foamed product of the present invention was prepared by the same method as in Example 16 except that the branching agent was changed to sorbitol. A fragment was cut from the foamed product of the present invention prepared and it was photographed by an optical microscope and the number of bubbles per unit volume was measured. As the result of measuring BSC of the foamed product, the melting point peak was 153°C. As the result of measuring the consumed amount of potassium permanganate of the foamed product by the elution test for the standard for apparatus and container package in accordance with the Notification No. 370 of the Ministry of Health and Welfare, safety as a food container was confirmed as the value was not higher than the specified one.

### [Comparative Example 9].

As the result of carrying out the method in Example 17 with no addition of a branching agent, though it could be made to be lower melting temperature, the apparent viscosity was low and carbon dioxide was highly released to give no foamed product of sufficient expansion ratio.

### [Example 18]

In the same manner as in Example 16, 100 parts by weight of PET flakes having an IV value of 0.73 prepared from recycled PET bottles as the main raw material, 0.5 part by weight of pyromellitic acid dianhydride as the branching agent, 0.5 part by weight of talc powder having a particle size of 0.1 to 0.2 microns as the crystallizing nuclear agent and 20 parts by weight of polybutylene adipate pellets having an IV value of 0.12 for making the melting point lower were dry-blended in a rotary hlender. Then, the mixture was vacuum-dried at 80°C for 24 hours to a moisture content not higher than 100 ppm and, while nitrogen-purged, stored in an aluminum bag and quantitatively supplied from the raw material supplying part purged by nitrogen for the preparation of the foamed product.

The screw had a diameter of 50 mm. The milling extruder was constituted by a raw resin supplying part, a first compressing part, a carbon dioxide supplying vacuum part, a compressing/mixing part, a backflow preventing part, a second compressing part and a measuring part, and pellet process was adopted in which the material was extruded from a nozzle die of 0.5 mm diameter and cut by a dry cutter. The first compressing part was set to 260°C, the carbon dioxide supplying part to 240°C, the compressing/milling part to 250°C, the backflow preventing part to 200°C, the vacuum vent part to 150°C, the second compressing part to 170°C, the measuring part and the adaptor to 150°C, the pressure before the die to 18 MPa, the die part to 150°C and the velocity for passing the orifice to 828 cm/sec. Carbon dioxide was compressed and supplied in an amount of 1 weight % based on the total resin amount. Under carbon dioxide supercritical condition, pellets containing transesterified polyethylene-butylene-adipate-terephthalate branched copolymer was prepared. By using a common 50 ton injection molding machine, notched specimens for measuring Izod impact strength were prepared from the pellets at an injection temperature of 200°C and a mold temperature of 40°C.

### [Comparative Example 10]

Notched specimens for measuring Izod impact strength were prepared by the same method as in Example 18 by using only PET flakes prepared from PET bottles.

The specimens prepared in Example 18 showed no disadvantage in molding such as shrinkage, and the melting point peak was 171°C by a DSC measurement. The lzod impact strength was higher than that of Comparative Example 10 using only PET flakes prepared from recycled PET bottles by 120 %. Furthermore, in Example 18, the injection molding temperature could be made to be lower than that of Comparative Example 10 of 270°C and thus the injection cycle could be improved by 30 % to increase productivity.
Then the DSC measurement of the specimen injection molded by a procedure in which the injection molded specimen of Example 18 and its spur and runner were pulverized and injection molded in the same manner showed a melting point peak of 168°C which is not highly different from that of the first molding. The Izod impact strength was improved by 107 % compared to the case of injection molding only the PET flakes prepared from ecycled PET bottles in Comparative Example 10 but was lowered than the first molding to some extent but was more excellent than Comparative Example 10.

### [Example 19]

A foamed sheet of 10 mm thick and an expansion ratio of 25 was molded by the same method as in Example 17 only except that polyethylene adipate was replaced by 10 parts by weight of 1,4-dibutanol adipate and 10 parts by weight of polybutylene terephthalate having an IV value of 0.81 to prepare a foamed product containing polyethylene-butylene-adipate-terephthalate branched copolymer of the present invention.
A water resistance test on the foamed sheet was carried out against a water column of 1 m high. As it showed no water leakage, it was confirmed independent bubbles were formed in the foamed product of the present invention. As the result of measuring DSC of the foamed product, the melting point peak was 135°C.

### [Example 20]

A foamed sheet of 10 mm thick and an expansion ratio of 25 was molded by the same method as in Example 17 only except that polybutylene adipate was replaced by 10 parts by weight of 1,2-diethanol adipate having an IV of 0.81 to prepare a foamed product containing polyethylene-butylene-adipate-terephthalate branched copolymer of the present invention.
A water resistance test on the foamed sheet was carried out against a water column of 1 m high. As it showed no water leakage, it was confirmed independent bubbles were formed in the foamed product of the present invention. As the result of measuring DSC of the foamed product, the melting point peak was 126°C.

### [Example 21]

100 parts by weight of polybutylene terephthalate pellets (IV value: 0.68), 1 part by weight of pyromellitic dianhydride powder as the branching agent. I part by weight of anatase type titanium dioxide powder having a particle size of 0.3 to 0.4 micron as the foaming nuclear agent and as the photocatalyst, and 100 part by weight of polybutylene diol for elastomerizing were respectively supplied from the raw material supplying part purged by nitrogen by a quantitative feeding equipment.

The screw part had a diameter of 50 mm. The extruder was constituted by a double axle raw material supplying part of the present invention, a first compressing part, a primary carbon dioxide supplying vacuum part for critical reaction, a compressing/milling part, a backflow preventing part, a secondary carbon dioxide supplying vacuum part for foaming, a second compressing part and a measuring part, and T die process was adopted in which the material was extruded from a die of a slit width of 0.4 mm and 1 m long through an adaptor. The temperatures of the machines in regular operation were set as follows. The first compression part was set to 250°C, the carbon dioxide supplying part to 200°C, the compressing/milling part to 250°C, the backflow preventing part to 200°C, the second compressing part to 220°C, the measuring part and the adaptor to 190°C, the pressure before the die to 18 MPa, the die part to 170°C and the velocity for passing the orifice to 828 cm/sec. The amount of heat required for melting, when the polymer was passed through the extruder, was supplied from shearing force to give the actual temperature of the polymer. Primary carbon dioxide was compressed and fed in an amount of 1 weight % based on the total resin amount. Under carbon dioxide critical condition, after transesterified, secondary carbon dioxide was compressed and fed in an amount of 5 weight % based on the total resin amount. Both sides of the extruded foamed sheet was cooled by a chilled roller and then further cooled by a water shower and the foamed molding of the present invention having an expansion ratio of 50 was cut to a definite length while being taken out to prepare the elastic polyester foam of the present invention.

A fragment was cut from the final foam product of the present invention thus prepared, and photographed by an optical microscope and the number of bubbles per unit volume was measured. Also, a water resistance test on the foamed sheet was carried out against a water column of 1 m high. As it showed no water leakage, it was confirmed independent bubbles were formed in the foamed product of the present invention.

### [Example 22]

100 parts by weight of PET flakes prepared from recycled PET bottles (IV value: 0.73) as the main raw material, 1 part by weight of pyromellitic dianhydride powder as the branching agent, 1 part by weight of anatase type titanium dioxide powder having a particle size of 0.3 to 0.4 microns as the foaming nuclear agent and as the photocatalyst, 15 parts by weight of polybutylene adipate pellets (IV value: 0.12) for making the polymer to be low melting and 1 part by weight of a thermodegradable foaming agent (dinitropentanetetramine) were dry-blended in a rotary blender. Then, the mixture was vacuum dried at 80°C for 24 hours to a moisture content not higher than 100 ppm and, while purged by nitrogen, stored in an aluminum bag and quantitatively supplied from the raw material supplying part purged by nitrogen for the preparation of the foamed product.

The screw part had a diameter of 50 mm. The extruder was constituted by a raw material supplying part, a first compressing part, a carbon dioxide supplying vacuum part, a compressing/milling part, a backflow preventing part, a second compressing part and a measuring part, and T die process was adopted in which the material was extruded from a die of a slit width of 0.4 mm and 1 m long through an adaptor. The temperatures of the machines in regular operation were set as follows. The first compression part was set to 200°C, the carbon dioxide supplying part to 200°C, the compressing/milling part to 200°C. the backflow preventing part to 200°C, the second compressing part to 180°C, the measuring part and the adaptor to 150°C, the pressure before the die to 18 MPa, the die part to 130°C and the velocity for passing the orifice to 828 cm/sec. The amount of heat required for melting when the polymer was passed through the extruder was supplied from shearing force to give the actual temperature of the polymer. Carbon dioxide was compressed and fed in an amount of 0.5 weight % based on the total resin amount. Under carbon dioxide supercritical condition, after transesterified, the extruded foamed sheet was cooled by a chilled roller and then the both sides of the sheet were irradiated by UV lamp and a sheet molding of the present invention of 1 mm thick and an expansion ratio of 2.5 was wound. It was reheated to 170°C and, while the expansion ratio was increased, the thickness was controlled by a roller and molded to a foamed sheet of 10 mm thick and an expansion ratio of 25 to wind a final foamed product containing polyethylene-butylene-adipate-terephthalate branched copolymer of the present invention.

A fragment was cut from the final foamed product of the present invention thus prepared and it was photographed by an optical microscope and the number of bubbles per unit volume was measured. As the result of measuring DSC of the foamed product, the melting point peak was 188°C. As the result of measuring the consumed amount of potassium permanganate of the foamed product by the elution test for the standard for apparatus and container package in accordance with the Notification No.370 of the Ministry of Health and Welfare, safety as a food container was confirmed as the value was not higher than the specified one.

### [Example 23]

A foamed product of the present invention was prepared in the same manner as in Example 22 only except that the branching agent was changed to sorbitol. A fragment was cut from the foamed product of the present invention thus prepared and it was photographed by an optical microscope and the number of bubbles per unit volume was measured. As the result of measuring DSC of the foamed product, the melting point peak was 182°C. As the result of measuring the consumed amount of potassium permanganate of the foamed product by the elution test in the standard for apparatus and container package in accordance with the Notification No. 370 of the Ministry of Health and Welfare, safety as a food container was confirmed as the value was not higher than the specified one.

### [Comparative Example 11]

The method in Example 23 was carried out with no addition of a branching agent. As the result, though it could be made to be low melting temperature, the apparent viscosity was low and carbon dioxide was highly released to give no foamed product of sufficient expansion ratio.

### [Example 24]

In the same manner as in Example 22, 100 parts by weight of PET flakes (IV value: 0.73) prepared from recycled PET bottles as the main raw material, 0.5 part by weight of pyromellitic acid dianhydride as the branching agent. 0.5 part by weight of platinum-carrying rutil type titanium oxide powder having a particle size of 0.1 to 0.2 microns as the foaming nuclear agent and as the photocatalyst, 10 parts by weight of polybutylene adipate pellets (IV value: 0.12) for making the melting point lower were dry-blended in a rotary blender. Then, the mixture was vacuum-dried at 80°C for 24 hours to a moisture content not higher than 100 ppm and, while nitrogen-purged, stored in an aluminum bag and quantitatively supplied from the raw material supplying part purged by nitrogen for the preparation,of the foamed product.

The screw had a diameter of 50 mm. The milling extruder was constituted by a raw resin supplying part, a first compressing part, a carbon dioxide supplying vacuum part, a compressing/mixing part, a backflow preventing part, a vacuum vent part, a second compressing part and a measuring part. and pellet process was adopted in which the material was extruded from a nozzle die of 0.5 mm diameter and cut by an underwater cutter. The first compression part was set to 200°C, the carbon dioxide supplying part to 200°C , the compressing/milling part to 200·°C, the backflow preventing part to 200°C, the vacuum vent part to 190°C, the second compressing part to 190°C, the measuring part and the adaptor to 170°C, the die part to 150°C and the velocity for passing the orifice to 828 cm/sec. Carbon dioxide was compressed and supplied in an amount of 0.3 weight % based on the total resin amount. Under carbon dioxide supercritical condition, pellets of the present invention (beads for foaming) containing transesterified polyethylene-butylene-adipate-terephthalate branched copolymer was prepared.

The beads for foaming were pre-expanded to about 50 times in a hot-air drier at 170°C and then heat-compressed to a cup shape of 2 mm thick with steam at 130°C to prepare foamed cups of the present invention. The expansion ratio of the specimen cut from the cup was 46. As the result of measuring DSC of the foamed product, the melting point peak was 190°C.

### [Example 25]

A foamed sheet was prepared in the same manner as in Example 23 only except that polybutylene adipate was replaced by 5 parts by weight of 1,4-dibutanol adipate and 10 parts by weight of polybutylene terephthalate (IV value: 0.81), and irradiated by UV ray, and then reheated and molded to a foamed sheet of 10 mm thick and an expansion ratio of 25 of the present invention to prepare a foamed product containing polyethylene-butylene-adipate-terephthalate branched copolymer of the present invention.

A water resistance test on the foamed sheet was carried out against a water column of 1 m high. As it showed no water leakage, it was confirmed independent bubbles were formed in the foamed product of the present invention. As the result of measuring DSC of the foamed product, the melting point peak was 185°C.

### [Example 26]

A foamed sheet was prepared in the same manner as in Example 22 only except that polybutylene adipate was changed to 7 parts by weight of 1,2-diethanol adipate and 15 parts by weight of polybutylene trerephthalate (IV value: 0.81) and the first compression part was set to 200 °C, the carbon dioxide feeding part to 200°C, the compressing/milling part to 200·°C. the backflow preventing part to 200°C, the vacuum vent part to 140°C, the second compressing part to 140°C, the measuring part and the adaptor to 130°C, the die part to 120°C and the velocity for passing the orifice to 828 cm/sec. It was irradiated by UV ray and reheated and then molded to a foamed sheet of 10 mm thick and an expansion ratio of 25 to prepare a foamed product of the present invention containing polyethylene-butylene-adipate-terephthalate branched copolymer.

A water resistance test on the foamed sheet was carried out against a water column of 1 m high. As it showed no water leakage, it was confirmed independent bubbles were formed in the foamed product of the present invention. As the result of measuring DSC of the foamed product, the melting point peak was 154°C.

### [Example 27]

In the same manner as in Example 26, an inner layer was formed and it was put between two polybutylene terephthalate layers of 10 µ thick (IV value:0.81) by using a Tandem type extruder to form a multilayer structure and a sheet was prepared at a low temperature of extruding the inner layer lower than the decomposition temperature of the foaming agent. Then, after irradiated by UV ray, it was reheated at a temperature lower than the decomposition temperature of the foaming agent and molded to a foamed sheet of 20 mm thick and an expansion ratio of 50 to prepare a foamed product of the present invention containing polyethylene-butylene-adipate-terephthalate branched copolymer. The resultant foamed molding had a melting point peak of 220°C in its surface layer and a melting point peak of 154°C in its inner layer.

### [Example 28]

A foamed sheet was prepared in the same manner as in Example 23 only except that polybutylene terephthalate (IV value: 0.81) was used instead of PET and polybutylene adipate was changed to 10 parts by weight of 1,2-dibutanol succinate and the thermodegradable foaming agent used was changed to p,p-oxybisbenzenesulfonylhydrazide and the first compressing part was set to 200°C, the carbon dioxide supplying part to 200°C, the compressing/milling part to 200°C, the backflow preventing part to 200°C, the vacuum vent part to 140°C, the second compressing part to 140°C, the measuring part and the adaptor to 130°C, the die part to 120°C and the velocity for passing the orifice to 828 cm/sec. It was irradiated by UV ray and reheated and then molded to a foamed sheet of 10 mm thick and an expansion ratio of 25 to prepare a foamed product of the present invention containing polybutylene-succinate-terephthalate branched copolymer.

A water resistance test on the foamed sheet was carried out against a water column of 1 m high. As it showed no water leakage, it was confirmed independent bubbles were formed in the foamed product of the present invention. As the result of measuring DSC of the foamed product, the melting point peak was 151°C.

### [Example 29] - Capsule -

70 parts by weight of bleached pulp, 30 parts by weight of potato starch, 70 parts by weight of water which is the sum of deionized water and the moisture contained in the pulp and starch, 20 parts by weight of sorbitol, 10 parts by weight of trehalose and citric acid in an amount of 0.1 % based on starch were mixed together and the mixture was fed from the feeding hole and carbon dioxide was supplied from the vacuum part in an amount of 0.05 % based on water and the mixture was fed to a stainless steel single screw extruder with 45 mm double vent in which the screw of the extruder was designed so as to pass the processes of feed, compression, vacuum, milling, compression, dehydration from the vent, milling and compression and so as to give milling effect not inferior to a usual twin screw extruder and the mixture was reacted at 180 · °C under 12 MPa. The velocity passing through the orifice was set to 828 cm/sec and the mixture was released from the vent hole and dehydrated by a water-sealed pump and extruded at a pressure before the nozzle of 11 MPa and hot-cut to prepare round pellets of a thermoplastic cellulose composition with no starch smell of the present invention.

A sheet of an extruded thickness of 0.5 mm was extruded at 120°C by using a T die extruder and royal jelly was poured by a rotary diroll machine to prepare healthy food capsules of the present invention. The capsule membrane held practically sufficient strength and did not adhered mutually even after stood at 20°C under an environment of 60 % relative humidity for 24 hours. Also, after immersed in a vial bottle containing aqueous hydrochloric acid of a pH of 5 at 36°C for 2 hours, the capsule was easily collapsed by light shaking.

Then, the above-mentioned round pellets were pulverized in a centrifugal mill and the particles not lower than 500 microns were removed by a cyclone and dispersed in water to be swollen and then a sheet of dry thickness of 0.5 mm was prepared by wet process and royal jelly was poured by a rotary diroll machine to prepare a healthy food capsules of the present invention. The capsule membrane held practically sufficient strength and did not adhered mutually even after stood at 20°C under an environment of 60 % relative humidity for 24 hours. Also, after immersed in a vial bottle containing aqueous hydrochloric acid of pH 5 at 36°C for 2 hours, the capsule was easily collapsed by light shaking.

Then, the above-mentioned round pellets were made into capsule bodies with no step having an outer diameter of 2.8 mm and an inner diameter of 2.4 mm and 4 mm long and capsule caps of an outer diameter of 3.3 mm, an inner diameter of 2.9 mm and 4 mm long. Kakkonnto Powder (a powder medicine) was fed in them and the mixture was tumbled and dropped on a stainless steel plate inclined to 45 degree and heated to 160°C to adhere it under shrinkage to prepare capsules for a cold of the present invention. The capsule membrane held practically sufficient strength and did not adhered mutually even after stood at 20°C under an environment of 60 % relative humidity for 24 hours. Also, after immersed in a vial bottle containing aqueous hydrochloric acid of pH 5 at 36°C for 2 hours, the capsule was easily collapsed by light shaking.

### [Example 30] - Elastic foam -

The screw had a diameter of 50 mm. The foaming extruder was constituted by a twin screw raw resin supplying part, a first compressing part, a primary carbon dioxide supplying vacuum part for critical reaction, a compressing/mixing part, a backflow preventing part, a second carbon dioxide supplying vacuum part for foaming, a second compressing part and a measuring part and T die process was adopted in which the material was extruded from a die of a slit width of 0.4 mm and 1 m long through an adaptor. The first compressing part was set to 250°C, the carbon dioxide supplying part to 200°C, the compressing/milling part to 250°C, the backflow preventing part to 200°C, the second compressing part to 220°C, the measuring part and the adaptor to 190°C, the pressure before the die to 18 MPa. the die part to 170°C and the velocity for passing the orifice to 828 cm/sec. The amount of heat required for melting was supplied from shearing force during the polymer was passed through the extruder to give the actual temperature of the polymer. Primary carbon dioxide was compressed and fed in an amount of I weight % based on the total resin amount. Under carbon dioxide supercritical condition, after transesterified, secondary carbon dioxide was compressed and fed in an amount of 5 weight % based on the total resin amount. Both sides of the extruded foamed sheet was cooled by a chilled roller and further cooled by a water shower and cut to a specified length, while drawn, to prepare a foam molding of the present invention having an expansion ratio of 50 and 100mm thick thus to prepare an elastic polyester foam of the present invention.

A fragment was cut from the final foam product of the present invention thus prepared, and photographed by an optical microscope and the number of bubbles per unit volume was measured. Also, a water resistance test on the foamed sheet was carried out against a water column of 1 m high. As it showed no water leakage, it was confirmed independent bubbles were formed in the foamed product of the present invention.

### [Example 31] - Medicinal wafer -

Pellets were molded in the same manner as in Example 4 only except that the amount of glycerol formulated was changed to be 30 parts by weight and the maximum temperature of heating was changed to be 150°C and the pressure was changed to be 2,2 MPa. Thus, the materials were filtered through a 100 mesh filter by using the stainless steel equipment of the present invention and extruded from nozzles of 1 mm diameter and the starch composition of the present invention was pelletized by a hot cutter. No popcorn smell was felt during pelletizing. The resultant pellets showed as good thermoplasticity as a MI value of 7 at 180°C. Total amount of nitrogen-containing aromatic components generated was lower than 0.1 ppm.

A film of 10µm thick was prepared by using the above-mentioned pellets by usual inflation process. This film was slit to 10 cm width and cut to 10 cm long by a roll cutter to machine direction to prepare the medicinal wafer of the present invention. This medicinal wafer had practically sufficient tensile strength and softness and can be easily adhered with water. Also, 1 g of sucrose was wrapped in the medicinal wafer and immersed in a vial bottle containing aqueous hydrochloric acid having a pH of 5 at 36°C and then shaken lightly. The medicinal wafer was easily collapsed and wrapped sucrose was dissolved.

### [Example 32] - Gelled product -

Round pellets of a thermoplastic cellulose composition with no starch smell according to the present invention was prepared in the same manner as in Example 29 only except that the amount of bleached pulp was changed to be 50 parts by weight and the amount of potato starch was changed to 50 parts by weight.

The round pellets mentioned above were fed in 100 ml of water to be swollen. An aqueous solution containing two tablespoonfuls of instant coffee and 50 g of sucrose in 360 ml of water and the solution prepared above were fed in a heat-resistant glass container and mixed well and heated by an electronic oven for about 4 minutes and the dissolved solution was fed in a mold and, after intense heat was removed, cooled in a refrigerator and solidified to prepare a coffee jelly which is a gelled product of the present invention. When compared to a coffee jelly using powder gelatin, no clear difference was found except that the product of the invention had a somewhat soft eating feel. While powder gelatin is feared to cause BSE, all of the raw materials of the present invention are of vegetable and is not feared to cause BSE and was ecologically excellent.

## Claims

1. A method for processing a substance **characterized by** that the substance is compressed continuously together with carbon dioxide to give a fluid of supercritical or subcritical state and it is extracted, mixed and/or modified wherein the maximum flow rate during processing is 10 to 1500 m/second.

2. The method according to Claim 1, wherein a composition containing at least one of polysaccharide and protein as the main ingredient is processed under said critical state and then heated and compressed to give a thermoplastic composition.

3. The method according to Claim 2, wherein said composition contains a thermoplastic resin and/or a plasticizer.

4. The method according to Claim 2 or 3, wherein said polysaccharide is starch or cellulose and said protein is bean curd lees.

5. The method according to any one of Claims 2 to 4, wherein said composition is processed as said fluid of critical state and, after hydrolyzed by heating and compressing, it is dehydratively polycondensed.

6. The method according to Claim 5, wherein said composition is prepared by adding at least one compound selected from the group consisting of acids and phenols in an amount of 0.01 to 0.5 weight % to the polysaccharide.

7. The method according to Claim 1, wherein an aromatic polyester is processed as a fluid together with a copolymerizing ingredient for making the product lower melting temperature and a branching agent in said critical state to obtain a foam product containing a branched copolymer.

8. An equipment **characterized in that** it is a screw equipment with an orifice wherein a substance is compressed continuously together with carbon dioxide to give a fluid of critical state and it is extracted mixed and/or modified and a maximum flow rate is obtained at the orifice part during processing.

9. The equipment according to Claim 8 which is a screw type processing equipment in which a substance is compressed continuously together with carbon dioxide to be processed as a fluid of critical state, **characterized in that** next to the extruding screw in the raw material supplying part, a vacuum part in which the shaft of said screw is made thin and the gap volume between the screw blades is increased is provided and carbon dioxide is introduced to the vacuum part, and thenafter the vacuum part, a compressing part in which the shaft is again made thick and the intervals of the blades are made narrow is provided, and then the thickness of the shaft is made to be substantially same as the inner periphery of the barrel, and that an orifice part in which an orifice is provided on the surface or on the surruoundings of said shaft is provided.

10. The equipment according to Claim 9, wherein the maximum flow rate of said substance passing through the orifice is 10 to 1500 cm/seconds.

11. The equipment according to Claim 9 or 10, wherein said raw material supplying part consists of twin screws, the ratio of the rotaion of the main screw to the subscrew being 1:2 and the arrangement of adjacent paddles being not lower than 60 degree and not higher than 180 degree.

12. The equipment according to Claim 9 or 10 wherein a reversely tapered subscrew is provided next to said orifice part and it is made to be twin screw structure partly.

13. A thermoplastic composition prepared by the method according to Claim 1, which comprises a polysaccharide and contains cellulose or hemicellulose as one of the main ingredients.

14. The thermoplastic composition according to Claim 13, containing 0.01 to 3 weight % of mannose ingredient.

15. The thermoplastic composition according to Claim 13 or 14, containing a biodegradable resin.

16. The thermoplastic composition according to any one of Claims 13 to 15, wherein at least a part of the biodegradable resin is an aromatic biodegradable resin.

17. The thermoplastic composition according to any one of Claims 13 to 16, containing at least one plasticizer selected from the group consisting of glycols, glycerols, sorbitol and their mixtures.

18. The thermoplastic composition according to any one of Claims 15 to 17, wherein the biodegradable resin is used in a ratio of 40 to 90 weight %.

19. A molding consisting of the thermoplastic composition according to Claims 13 to 18.

20. A thermoplastic composition consisting of starch, wherein the total amount of nitrogen-containing aromatic components generated and contained in the head space of a 20 ml vial bottle after feeding 10 g of a sample in it and heating it at 180°C for 1 minute is lower than 10 ppm.

21. The starch composition according to Claim 20, wherein said nitrogen-containing aromatic component is at least one selected from the group consisting of 5-acetyl-2,3-dihydro-1.4-thiazine, 2-acetyl-tetrahydropyridine, 2-propionyl-1-pyrroline, 2-acetyl-1-pyrroline and acetylpyrazine.

22. The starch composition according to Claim 20 or 21 consisting of a product prepared by a procedure in which at least one compound selected from the group consisting of acids and phenols is added in an amount of 0.01 to 0.5 weight % based on the weight of starch and starch is hydrolyzed and then dehydratively polycondensed.

23. The starch composition according to any one of Claims 20 to 22, which is blended with a thermoplastic resin.

24. A molding prepared by using the starch composition according to Claims 20 to 23 as the main raw material.

25. A bean curd lees composition molding consisting of a composition using a thermoplastic resin and bean curd lees as the main raw materials, wherein the total amount of hexanal and hexanol generated and contained in the head space after feeding 5 g of a sample in 20 ml vial bottle and heating it at 180°C for 1 minute is lower than 5 ppm.

26. The bean curd lees composition molding according to Claim 25, wherein the thermoplastic resin is at least one selected from the group consisting of polyolefin resin, polystyrene resin, polyamide resin, polyester resin and polyurethane resin.

27. The bean curd lees composition molding according to Claim 25 or 26. wherein the thermoplastic resin is a biodegradable resin.

28. A branched polyester copolymer molding, which is prepared by reacting (A) polyethylene terephthalate with (B) an aliphatic dialcohol and an aliphatic dicarboxylic acid having a carbon number of 1 to 4 and/or hydroxycarboxylic acid or their polymers in the presence of a branching agent and which has a melting point peak temperature of 120 to 190°C.

29. The polyester molding according to Claim 28, wherein 5 to 50 parts by weight of the ingredient (B) is mixed with 100 parts by weight of the ingredient (A) for use.

30. The polyester molding according to Claim 28 or 29, wherein said molding is a gas foamed product having an expansion ratio of 4 to 50.

31. A polyester foamed molding which is prepared by reacting (A) an aromatic polyester with (B) an aliphatic dialcohol and an aliphatic dicarboxylic acid having carbon number of 1 to 4 and/or hydroxy-dicarboxylic acid or their polymers in the presence of a branching agent and which has a melting point peak temperature of 150 to 195 °C and which is foamed in the presence of photocatalytic titanium dioxide and a thermodegradable foaming agent.

32. The foamed molding according to Claim 31, wherein the aromatic polyester (A) is polyethylene terephthalate or polybutylene terephthalate.

33. The foamed molding according to Claim 31 or 32, wherein said molding is an injection molded product, beads or an extruded molding.

34. A branched polyester elastomer consisting of a hard segment and a soft segment prepared by the method according to Claim 1 and its foamed molding.

35. A capsule, a wafer, a thickener and a gelled product consisting of a composition according to any one of Claims 13 to 18 and 20 to 23.

36. The edible capsule, the wafer, the thickener and the gelled product according to Claim 35, which is for drugs or foodstuffs.
